# EUROPEAN PATENT SPECIFICATION

(11) **EP 2 717 668 B1**
(45) Date of publication and mention of the grant of the patent: **27.04.2016**
(21) Application number: 12797464.0
(22) Date of filing: 07.06.2012
(51) Int. Cl.: A01C 7/04, A01C 7/08, A01C 7/10

(54) **SEED DISTRIBUTION TOWER FOR AN AIR SEEDER**
Samenverteilungstrum für eine pneumatische Sämaschine
TOUR DE DISTRIBUTION DE GRAINES POUR UN SEMOIR PNEUMATIQUE

(30) Priority: 10.06.2011 US 201113157890; 31.05.2012 US 201213485183
(43) Date of publication of application: 16.04.2014
(73) Proprietor: Great Plains Manufacturing, Incorporated, Salina, KS 67401 (US)
(72) Inventor: HUBALEK, Verne A., Lindsborg, KS 67456 (US); RIFFEL, Jacob R., Salina, KS 67401 (US)
(74) Representative: Uexküll & Stolberg
(86) International application number: PCT/US2012/041357
(87) International publication number: WO 2012/170690

(56) References cited:
- WO-A1-2005/004579
- WO-A1-2008/150239
- DE-A1-102005 038 216
- DE-U1- 9 313 779
- US-A- 5 831 542
- US-A1- 2011 035 163
- US-A1- 2012 312 211
- US-A1- 2013 319 305
- US-B1- 6 273 648
- US-B2- 7 555 990

## Description

### TECHNICAL FIELD

The present invention relates to air seeders and, more particularly, to improvements in the way in which a primary stream of air and seeds from a bulk source of supply on the machine is divided into a multiplicity of secondary streams for conveyance to individual openers that deposit the seeds into the ground as the machine advances. In other aspects it relates to modular construction concepts for a seed distribution tower.

### BACKGROUND AND SUMMARY

It is well known in the farm equipment industry to meter seeds or other particulate materials from bulk supply hoppers on the seeder into one or more airstreams that transport the seeds to a corresponding number of distribution towers, where each primary stream of air and seeds is divided into a number of secondary streams. The secondary streams are then directed to openers on the machine that deposit the seeds into the ground as the seeder advances.

It is also well known to temporarily shut off one or more of the hoses that carry the secondary streams so that the corresponding opener does not deposit any seeds, thereby creating a plant-free row in the field sometimes known as a tram line. Valves and electrically energized valve actuators of various types have been employed to carry out this function. In addition, electronic sensors have typically been provided on the secondary hoses to detect whether seeds are in fact passing through the hoses as anticipated. However, seeders necessarily operate in relatively harsh environments, and in the past the sensitive valves, actuators and sensors have been subject to malfunction and premature wear due to excessive exposure to such hostile conditions.

As the primary stream of air and seeds enters the distribution head of the tower through an inlet in the bottom of the head, the seeds are subjected to an abrupt right angle change in direction as they are split into secondary streams and exit the head horizontally. In prior towers, a significant amount of turbulence has been created at this location that can adversely affect the output rate of the tower and may damage the seeds.

DE 10 2005 038 216 A1 describes a seed distribution tower for an air seeder comprising an upright conduit for conveying a combination of seeds and air in a primary stream toward an upper end of the conduit, a distribution head at said upper end of the conduit for receiving the primary stream from the conduit and splitting the primary stream into a plurality of secondary streams that issue from a plurality of discharge outlets on the distribution head, and electrical hardware below said distribution head.

Accordingly, the present invention provides a seed distribution tower with the features of claim 1, wherein sensitive devices such as tram line valves, actuators and/or sensors are protectively housed within the interior of the distribution head of the tower, away from harsh environmental elements that could damage or ruin the devices.

The tower can have seed flow sensors for the secondary streams of air and seeds that are located at the distribution head of the tower, preferably within the head itself. Likewise, the tower can be adapted for use in tram line farming practices wherein one or more of the hoses carrying secondary streams to the openers can be selectively shut off so that no seeds are planted for that particular row. As in the case of the sensors, a valve for the tram line hose is located at, and preferably within, the distribution head. In addition, a special housing immediately below the distribution head encloses and protects delicate wiring and sensitive connectors associated with the various sensors and valves of the tower.

Preferred forms and embodiments of the invention are described in the dependent claims.

### BRIEF DESCRIPTION OF THE DRAWINGS

Figure 1 is a left, front perspective view of a cultivation air seeder utilizing seed distribution towers in accordance with the principles of the present invention;
Fig. 2 is a left side elevational view of the seeder;

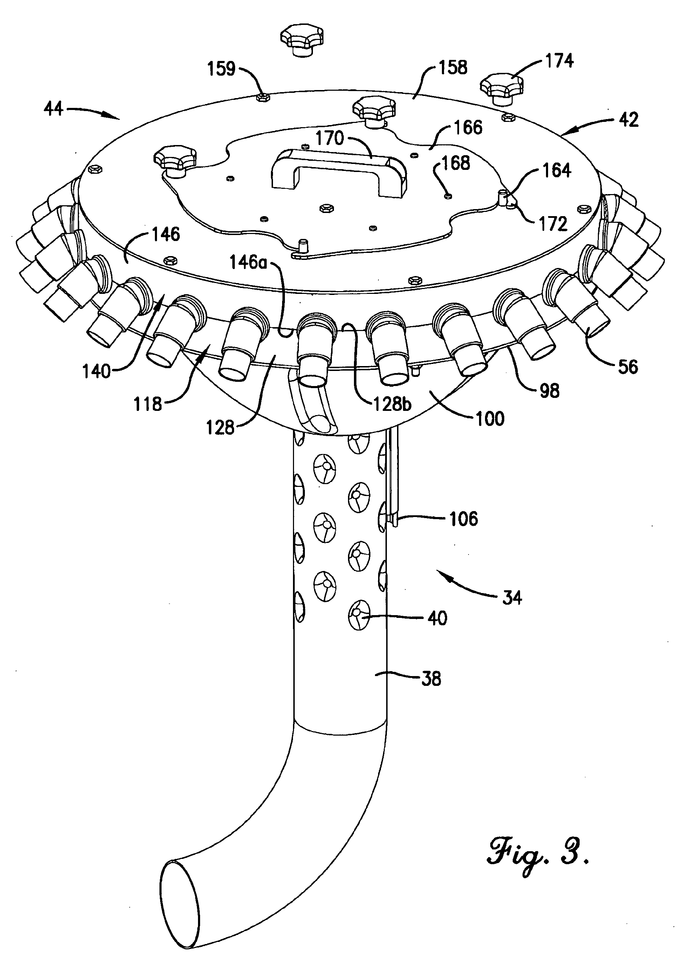

Fig. 3 is an enlarged left front perspective view of one of the distribution towers of the seeder with the secondary distribution hoses removed for clarity;
Fig. 4 is an enlarged, fragmentary bottom perspective view of the tower with parts broken away to reveal details of construction;
Fig. 5 is a fragmentary exploded view of the tower;
Fig. 6 is a top plan view of the tower;
Fig. 7 is a fragmentary vertical cross-sectional view through the upper end of the tower taken substantially along line 7-7 of Fig. 6;
Fig. 8 is an enlarged, fragmentary vertical cross-sectional view through the tower taken substantially along line 8-8 of Fig. 6;
Fig. 9 is an enlarged front perspective cross-sectional view of one of the blockage sensors of the tower;
Fig. 10 is a top perspective view of the lower disc of the stacked assembly of parts comprising the distribution head of the tower;
Fig. 11 is an enlarged, fragmentary cross-sectional view through part of the lower disc illustrating details of construction;
Fig. 12 is a bottom perspective view of the lower disc;
Fig. 13 is a bottom perspective view of the top disc of the stacked assembly of parts comprising the distribution head of the tower;
Fig. 14 is a top perspective view of the top disc;
Fig. 15 is a top perspective view of the inspection plate of the distribution head;
Fig. 16 is a bottom perspective view of the inspection plate, illustrating the attached transition cone in cross-section;
Fig. 17 is a fragmentary, vertical cross-sectional view through an alternative embodiment of the tower illustrating another form of eased transition inlet into the distribution head;
Fig. 18 is a fragmentary, vertical cross-sectional view through another alternative embodiment of the tower illustrating a further form of eased transition inlet;
Fig. 19 is an enlarged left front perspective view of an alternative distribution tower having a modular configuration;
Fig. 20 is an enlarged, fragmentary bottom perspective view of the modular tower of Fig. 19 with parts broken away to reveal details of construction;
Fig. 21 is a fragmentary exploded view of the modular tower;
Fig. 22 is a top plan view of the tower with a portion of the distribution head of the modular tower broken away to reveal internal details of construction, including the plenum;
Fig. 23 is a fragmentary vertical cross-sectional view through the modular tower taken substantially along line 23-23 of Fig. 22;
Fig. 24 is a fragmentary top perspective of the distribution head of the modular tower with the lid partially broken away to reveal internal details of construction, including the plenum;
Fig. 25 is an enlarged, cross-sectional perspective view of one embodiment of an outlet module of the tower, the shut-off valve of the module being shown in an open position;
Fig. 26 is an enlarged, cross-sectional perspective view of the module of Fig. 25 with the shut-off valve shown in a closed position;
Fig. 27 is an exploded top perspective view of the module of Fig. 25;
Fig. 28 is an exploded bottom perspective view of the module of Fig. 25;
Fig. 29 is a side perspective view of the module of Fig. 25 showing the manner in which the valve actuating motor may be detached from the valve;
Fig. 30 is a bottom perspective view of the module of Fig. 25 showing the manner in which the valve actuating motor may be detached from the valve;
Fig. 31 is a fragmentary perspective view of the distribution head illustrating the manner in which the outlet module of Fig. 25 may be installed into the support plate of the distribution head, the module being shown with its inboard end seated in place and its outboard end positioned to be pushed down into place;
Fig. 32 is a fragmentary bottom perspective view of the module in the partially installed position of Fig. 31;
Fig. 33 is a fragmentary perspective view of the partially installed module with its outboard end further seated into the support plate such that retaining barbs on the module are flexed to accommodate such seating movement;
Fig. 34 is a fragmentary bottom perspective view of the partially installed module corresponding to the position of Fig. 33;
Fig. 35 is a fragmentary perspective view of the module fully installed in its seat;
Fig. 36 is a fragmentary bottom perspective view of the fully installed module corresponding to the position of Fig. 35;
Fig. 37 is a fragmentary side elevational view of the fully installed module corresponding to the position of Figs. 35 and 36, the adjacent portions of the support plate of the distribution head being shown in cross-section for clarity;
Fig. 38 is an outboard end perspective view of an exemplary second embodiment of outlet module of a type adapted to receive and introduce an additional product into the secondary stream passing through the module;
Fig. 39 is an inboard end perspective view of the second embodiment of outlet module of Fig. 38;
Fig. 40 is an inboard end perspective view of an exemplary third embodiment of outlet module of a type having a downward discharge of the secondary stream; and
Fig. 41 is an outboard end perspective view of the third embodiment of outlet module of Fig. 40.

### DETAILED DESCRIPTION

The present invention is susceptible of embodiment in many different forms. While the drawings illustrate, and the specification describes, certain specific embodiments of the invention, it is to be understood that such disclosure is by way of example only. The principles of the present invention are limited by the scope of the appended claims.

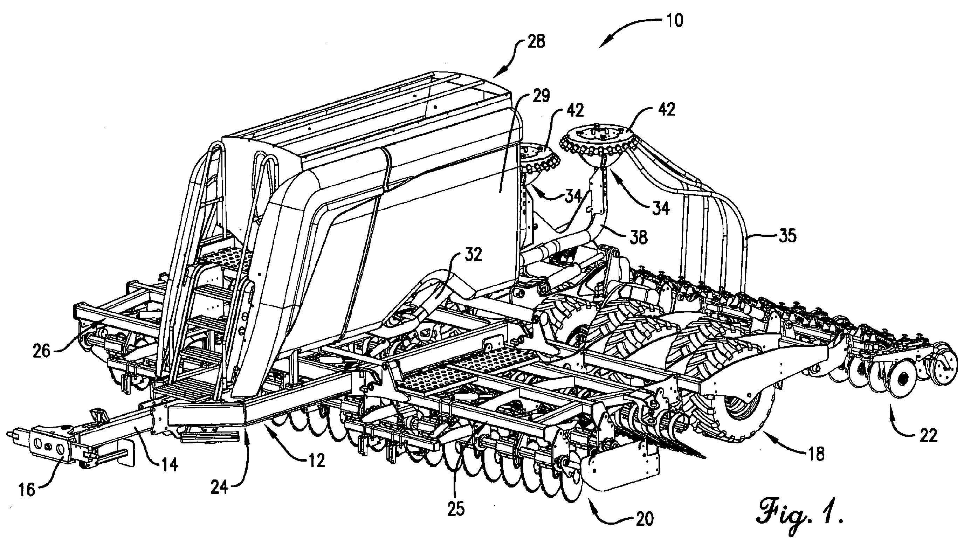

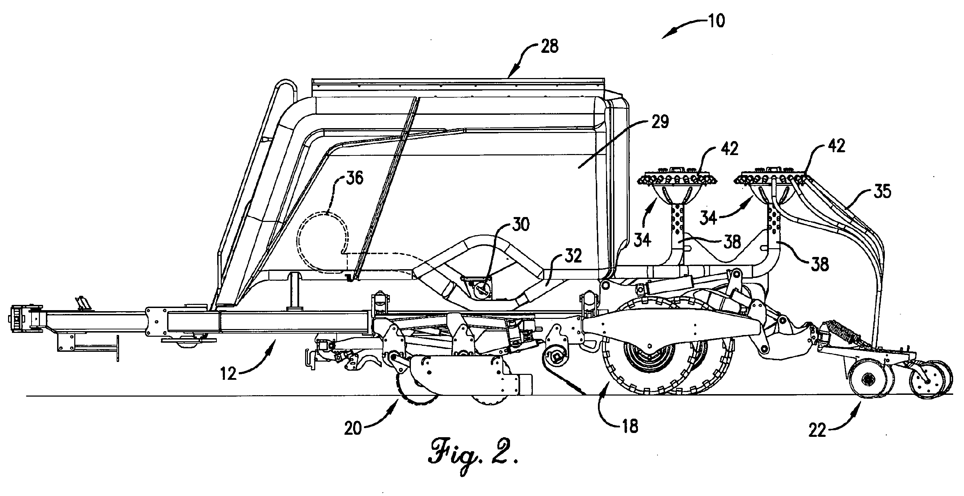

With initial reference to Figs. 1 and 2, an exemplary air seeder that may incorporate a seed distribution tower in accordance with the present invention is broadly denoted by the numeral 10 and is provided with a mobile chassis or frame 12 having a tongue 14 and hitch structure 16 for connecting seeder 10 to a suitable towing tractor or other vehicle (not shown). A number of ground-engaging wheels 18 are disposed across the rear of frame 12 to support the frame for over-the-ground travel. In the exemplary disclosed embodiment, seeder 10 comprises a cultivation air seeder and is thus provided with a set of cultivation tools 20 on frame 12 ahead of wheels 18. It will be appreciated, however, that the principles of the present invention may be readily employed on many different types of air seeders and are not limited to use with a cultivation air seeder. A row of openers 22 of any suitable construction well known to those skilled in the art is supported across the rear of frame 12 behind wheels 18. In the illustrated embodiment, seeder 10 comprises a three-section machine, such that frame 12 has a main frame section 24 and pair of left and right wing frame sections 25, 26 respectively, although the number of frame sections is not of importance insofar as the principles of the present invention are concerned. When applied to various parts of the machine, the terms "left" and "right" are utilized as if the machine were being viewed from the rear, looking forwardly.

Seeder 10 further comprises a hopper 28 supported on main frame section 24 for holding a supply of seeds and/or fertilizer or other particulate materials to be distributed to openers 22. Although the illustrated embodiment of the invention will be described in connection with the holding and distribution of seeds by hopper 28, it will be appreciated that the principles of the present invention are not limited to seeds and may, in fact, be utilized in connection with many different kinds of particulate materials.

A meter 30 at the bottom of hopper 28 may be utilized to dispense seeds at a metered rate into one or more conduits 32 that transport the metered seeds within an airstream toward the rear of the machine. One or more distribution towers 34 in accordance with the present invention are coupled with conduits 32 downstream from meter 30 for the purpose of dividing each primary stream of seeds into a multiplicity of secondary streams that flow to the openers 22 through hoses 35 (only a limited number being shown in the interest of clarity). A blower 36 adjacent the lower front end of hopper 28 supplies the transporting air for conduits 32 and the secondary hoses 35.

Hopper 28 may be constructed in a variety of different shapes and sizes, and from a variety of different materials. In the illustrated embodiment, hopper 28 is constructed from sheet metal and is covered on three sides by an ornamental facing 29 of molded ABS plastic or the like, which is the subject of related application S.N. 13/157,856 titled "Cultivation Air Seeder With Visually Enhanced Seed Hopper", assigned to the assignee of the present invention.

Each of the towers 34 includes an upright pipe or conduit 38 fixed to frame 12 and connected at its lower end to the conduit 32 from hopper 28. Conduit 38 may be provided with a multitude of exterior dimples 40 that form corresponding interior projections disposed to be impinged by seeds in the moving primary stream to aid in scattering the seeds as they approach the upper end of conduit 38. A generally flat, circular distribution head 42 is secured to the upper end of conduit 38 for splitting the primary stream into the secondary streams and transitioning the direction of seed flow from generally vertical to generally horizontal.

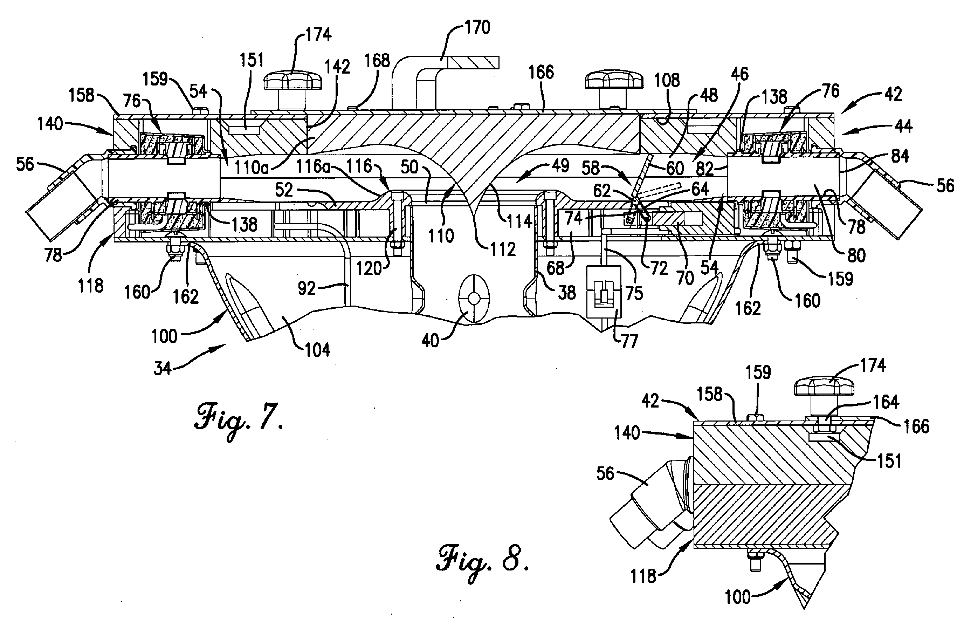

With reference to Fig. 7, in general terms distribution head 42 has an exterior 44 and a hollow interior 46. Interior 46 includes a plenum 48 that communicates with the upper end of conduit 38 via an eased inlet 49 that in one embodiment comprises (in part) a circular opening 50 in a floor 52 of plenum 48. Opening 50 surrounds the upper end of conduit 38 and is coaxially aligned therewith.

A series of outlets 54 within interior 46 extend circumferentially about the outer periphery of plenum 48 in communication therewith and are arranged on generally horizontal axes that project radially outwardly from the central axis of opening 50, in the nature of spokes of a wheel. A corresponding number of elbow fittings 56 are disposed around the exterior 44 of head 42 and are coupled with corresponding outlets 54. Fittings 56 are configured to attach to the corresponding secondary hoses that lead to the openers 22.

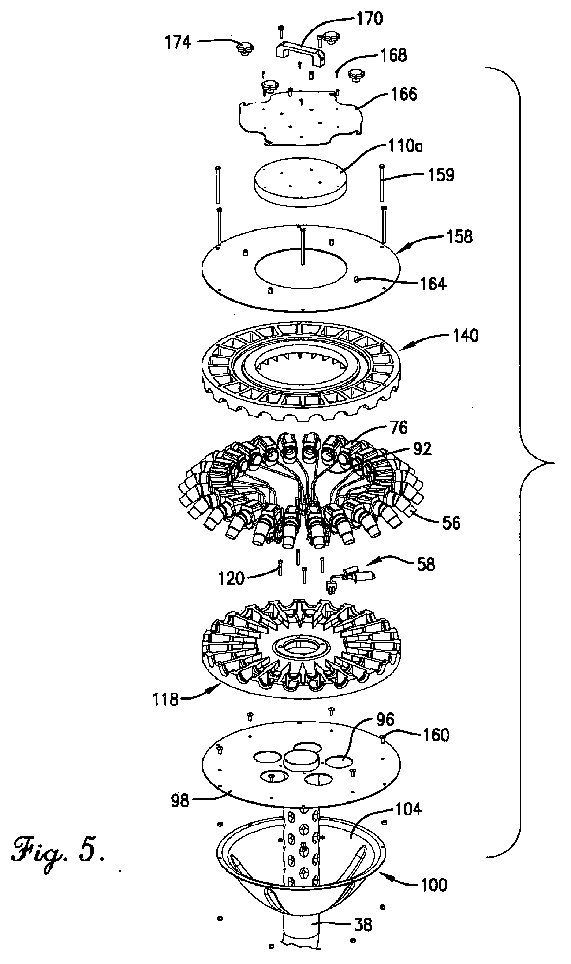

Distribution head 42 is adapted to facilitate tram line farming wherein one or more of the outlets 54 may be selectively closed off to prevent the delivery of seeds to the opener corresponding to the closed outlet. In the illustrated embodiment, distribution head 42 is adapted for selectively closing off a maximum of two diametrically opposed outlets 54, although there may be a smaller or greater number of such closable outlets without departing from the principles of the present invention. To carry out such closing function, a valve 58 (Figs. 5, 7) is located within the interior 46 of head 42 at the radially inner end of each closable outlet 54 (only one such valve being illustrated), adjacent the outer periphery of plenum 48. Valve 58 is adapted to be actuated between a closed position blocking communication between plenum 48 and outlet 54, and an open position permitting such communication. Thus, when valve 58 is closed, seeds transitioning from conduit 38 to outlets 54 are not permitted to enter closed outlet 54 such that no seeds are delivered to the opener 22 for that particular closed outlet. Seeds that would otherwise enter the closed outlet 54 are thus deflected back into plenum 48 for random and even distribution to the unblocked outlets 54.

In the particular embodiment disclosed in the drawings, valve 58 is a flapper valve that opens and closes by pivoting about a transverse axis, although valve 58 could take a variety of different forms without departing from the principles of the present invention. Valve 58 has a generally rectangular flapper 60 that stands generally upright when in the closed position and lies down generally horizontally when in the open position. A transversely extending pivot rod 62 is fixed to flapper 60 across its lower end and is rotatably retained within the floor 52 of plenum 48 to define the axis of pivoting movement.

An operating arm 64 is fixed to rod 62 and projects downwardly therefrom through floor 52 where it is operably coupled with a solenoid actuator 66 housed within a chamber 68 beneath floor 52, but still within the interior 46 of distribution head 42. Solenoid 66 has a stem 70 that is retracted when flapper 60 is in the closed position and extended when flapper 60 is in the open position. In a preferred embodiment, stem 70 retracts when solenoid 66 is energized, thus closing the outlet, but stem 70 is not spring-loaded such that when solenoid 66 is in a deenergized condition the pressure of a secondary stream seeking to leave plenum 48 freely pivots flapper 60 to its open position, which pulls stem 70 out to an extended position. Arm 64 is connected to stem 70 by a transverse pin 72, and an elongated slot 74 in arm 64 receives pin 72 so as to accommodate the fact that arm 64 swings arcuately while stem moves linearly. Solenoid 66 has an electrical conductor 75 that connects solenoid 66 with a source of electrical potential, including a controller (not shown). A connector 77 may be provided at a distal end of conductor 75 to facilitate such connection.

Each of the outlets 54 includes a sensor 76 (Figs. 5, 7,9) for detecting the movement or non-movement of seeds through outlet 54. Each sensor 76 is disposed within the interior 46 of distribution head 72 in association with the outlet 54, rather than being located on the exterior 44 of the head. In the exemplary embodiment shown in the drawings, each sensor 76 is constructed to serve as part of the outlet 54 with which it is associated. In this respect, a main portion of each sensor 76 comprises a tube 78 having a central passage 80, an inboard end 82, and an outboard end 84. Inboard end 82 is closest to plenum 48, while outboard end 84 receives the fitting 56.

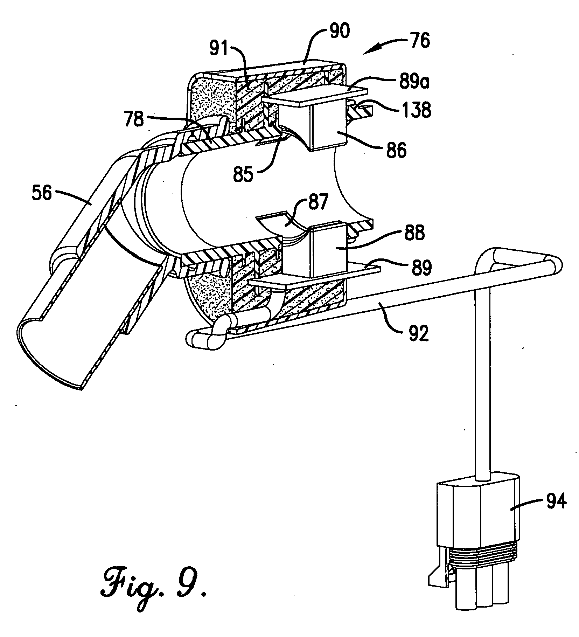

Details of the sensor 76 are illustrated in Fig. 9. In the illustrated embodiment, each sensor 76 comprises an optical sensor, although a variety of other types of sensors could be utilized, such as, for example, an audio sensor, a pressure sensor, or an impact sensor. Accordingly, the tube 78 of each sensor 76 carries a pair of photo cells 86, 88 arranged in diametrically opposed locations on tube 78 for transmitting a light beam across passage 80. One of the cells is a sender and the other is a receiver. Breaking of the light beam by moving seeds is utilized to confirm the fact that seeds are indeed being dispensed through the outlet. A clear lens 85 covers cell 86, while a clear lens 87 covers cell 88. A protective cup 90 surrounds tube 78 and the photo cells 86, 88 and contains a pair of circuit boards 89, 89a embedded within potting material 91, the boards 89, 89a being connected with cells 86, 88. Suitable boards 89, 89a are available from DICKEY-john Corporation of Auburn, Illinois as the VIGILENSE brand blockage sensor. An electrical conductor 92 is connected to boards 89, 89a and is located within chamber 68 below floor 52. Each conductor 92 has a connector 94 at its distal end for connecting sensors 76 with an appropriate control system of the machine.

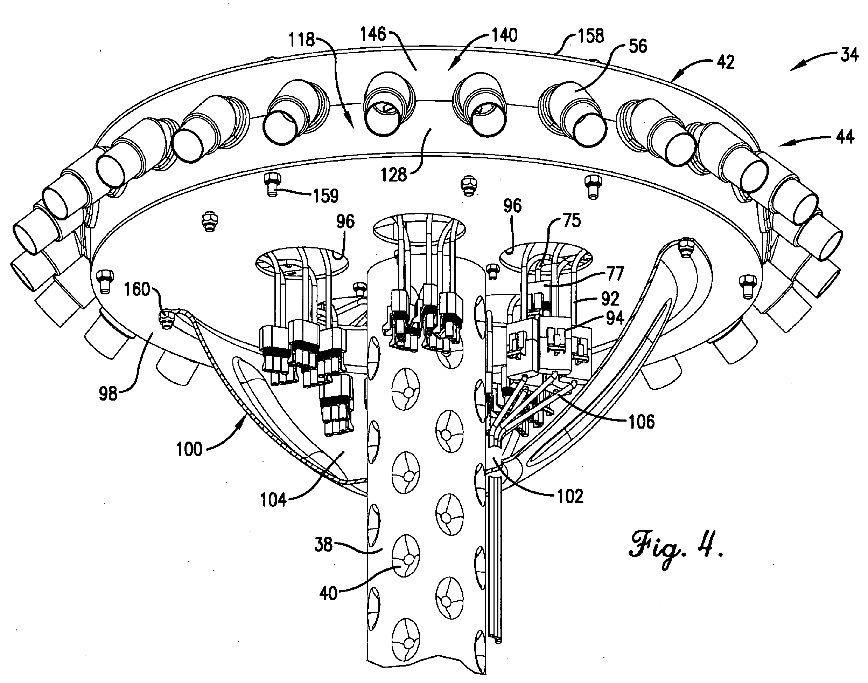

With reference to Fig. 4, the conductors 92 from sensors 76 and the conductor(s) 75 from solenoid(s) 66 lead generally radially inwardly from sensors 76 and solenoid(s) 66 toward conduit 38 and pass downwardly through a number of holes 96 in a circular, horizontal plate 98 that forms the bottom of distribution head 42. Plate 98 is welded or otherwise rigidly affixed to the upper end of conduit 38 and cooperates with the floor 52 of plenum 48 to define the chamber 68 within which the solenoids 66 are located. A bowl-shaped housing 100 is attached to the bottom of plate 98 and has an opening 102 that receives and clears the conduit 38. Housing 100 thus defines a protected compartment 104 immediately below the bottom of distribution head 42 within which electrical hardware such as portions of conductors 75, 92 and connectors 77, 94 may be disposed. Leads 106 forming part of the control system of the seeder may be routed upwardly through opening 102 and joined with the connectors 77, 94 within compartment 104.

Plenum 48 has a top wall 108 (Fig. 7) that is specially configured to cause the incoming primary stream of air and seeds to effectually transition from vertical to horizontal and split into the desired secondary streams. In this respect top wall 108 is provided with an inverted, centrally disposed transition cone 110 that is coaxial with conduit 38 and opening 50. Preferably, the cone 110 is so sized that its tip 112 projects downwardly into and slightly beyond opening 50, terminating within the upper end of conduit 38. Preferably also, the periphery 114 of cone 110 is parabolic in cross-section.

To provide additional guidance and smoothing for the air and seeds as they enter plenum 48 from conduit 38, the inlet 49 is constructed in the nature of an eased inlet so as to soften what would otherwise be a sharp, right angle corner or edge encountered by the air and seeds during their transition. In one embodiment, the eased inlet 49 comprises the planar opening 50 in floor 52 and a raised rim 116 around opening 50. Preferably, rim 116 is transversely rounded such that its upwardly facing surface 116a is arcuate. Rounded surface 116a is not necessarily concentric with the parabolic periphery 114 of cone 110 and is preferably a complex curve having a plurality of radii of curvature.

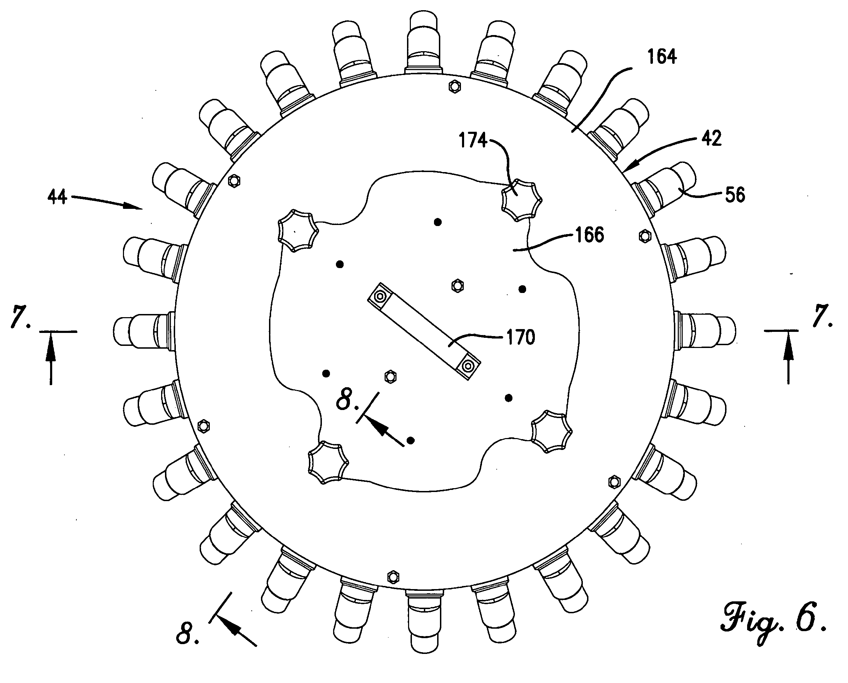

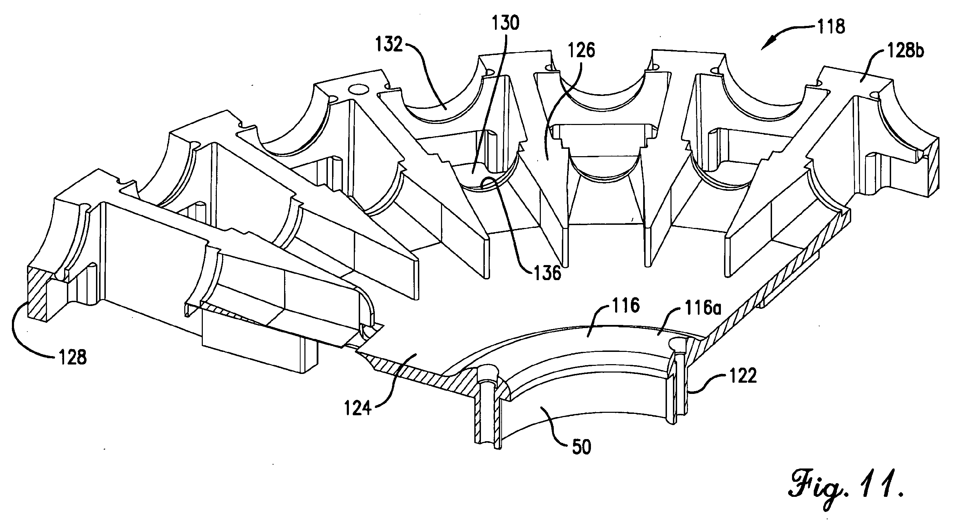

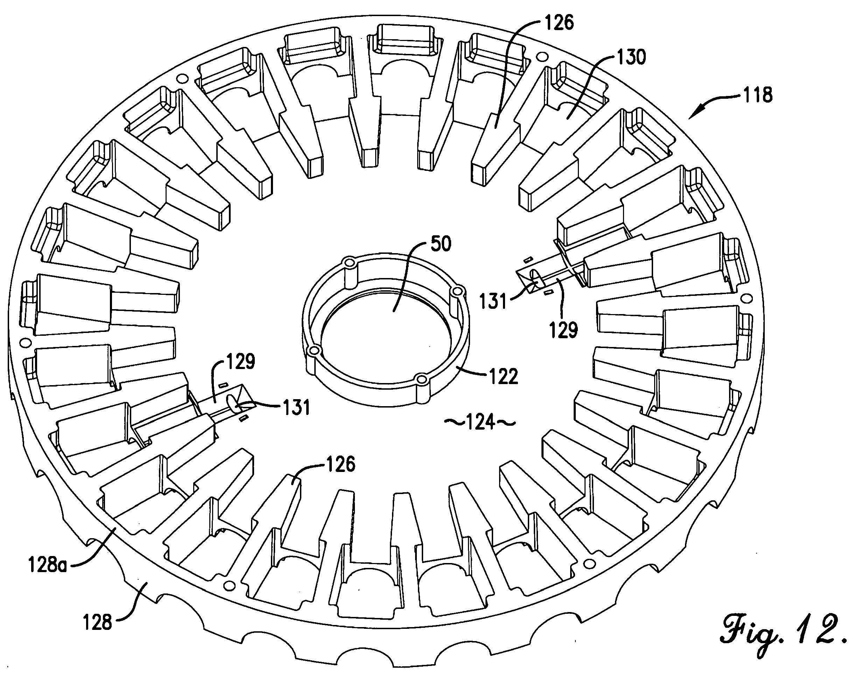

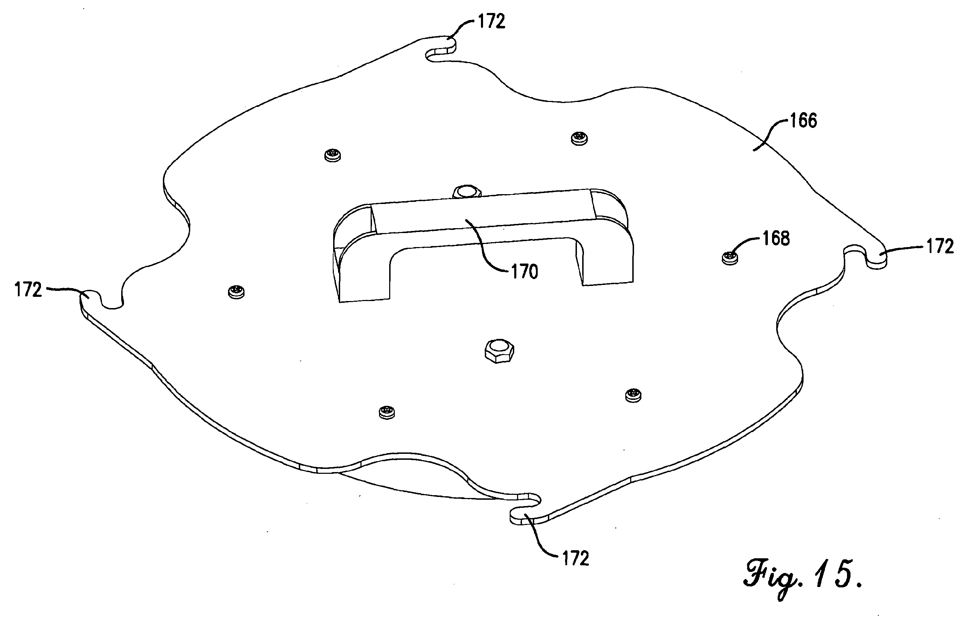

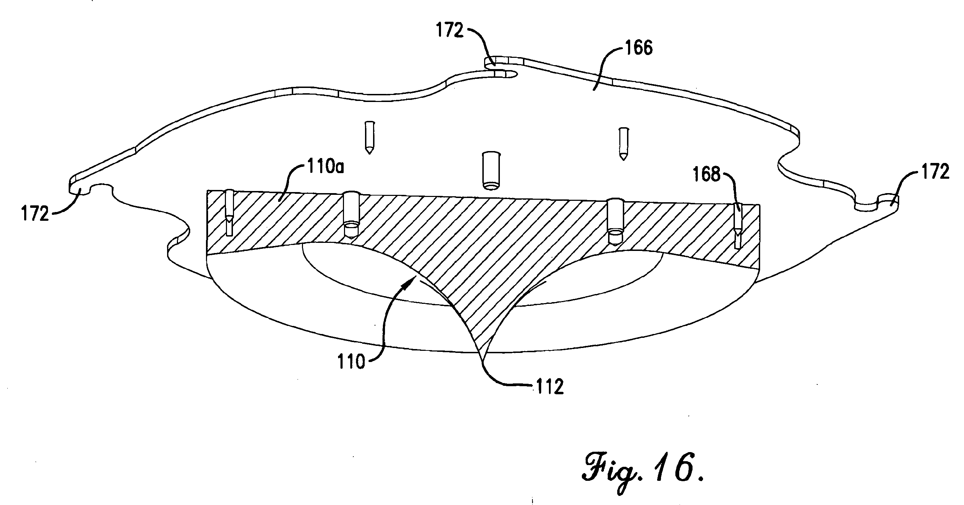

With reference to Figs. 5-8 and 10-16, each distribution head 42 may advantageously be constructed from a stacked assembly of parts. Plate 98 may serve as the support for the stack inasmuch as plate 98 is rigidly affixed to conduit 38. A first or lower disc 118, preferably molded from a relatively hard, rubber-like material such as poured urethane, overlies plate 98 and is attached thereto by a plurality of bolts 120 (see also Fig. 7). Disc 118 has an annular, central collar 122 (Figs. 11, 12) that projects downwardly from the underside of rim 116 and encircles the upper end of conduit 38. Collar 122 is coaxial with opening 50 and is slightly larger in internal diameter than opening 50 so as to define an undercut below rim 116 that rests upon the uppermost edge of conduit 38. A circular web portion 124 projects outwardly from collar 122 at the base of rim 116 so as to present floor 52 of plenum 48 on the upper face of web 124 and the top of chamber 68 on the bottom face of web 124. A series of circumferentially spaced apart, radially extending ribs 126 interconnect web 124 with an outermost, annular wall 128 that is spaced radially outwardly from the outer circumferential edge of web 124 so as to present a circumferential series of voids 130 between ribs 126. Outer wall 128 has a flat bottom edge 128a that lies flatly against plate 98. At two diametrically opposed locations, the bottom side of web 124 is provided with a recessed, radially extending seat 129 that matingly receives the body of a solenoid 66. A transversely extending slot 131 near the radially inner end of seat 129 serves the dual functions of a pivot seat for the rod 62 of flapper 60 and clearance for operating arm 64.

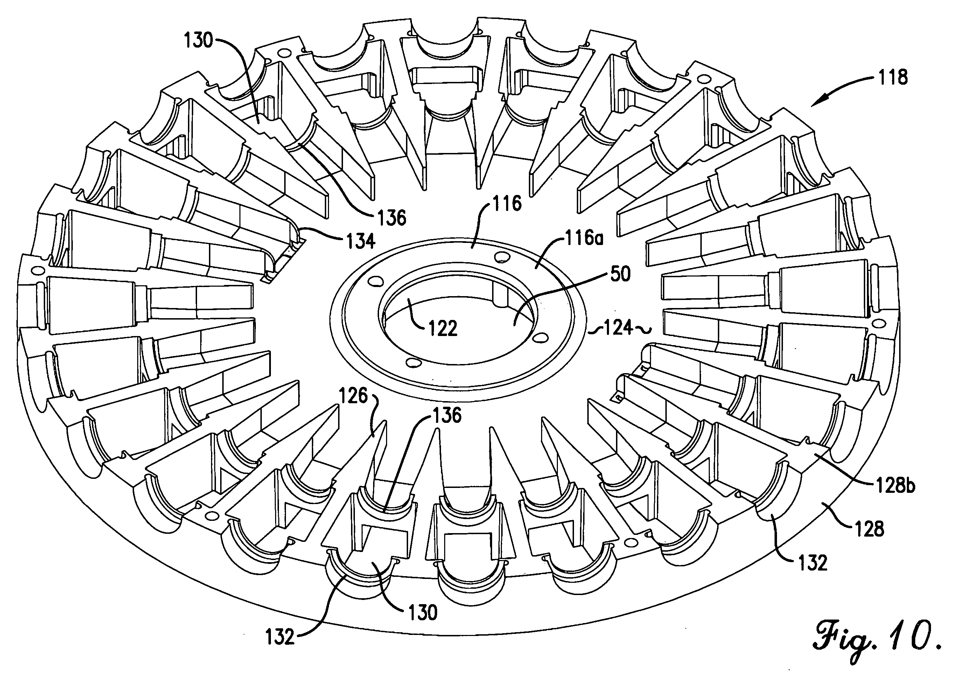

Referring particularly to Figs. 10 and 11, the top edge 128b of outer wall 128 is scalloped to present a series of equally circumferentially spaced semi-circular notches 132 configured to complementally receive the semi-circular bottom parts of the inner end of fittings 56. The ribs 126 are thicker in a vertical dimension than web 124 so as to project upwardly beyond the plane of web 124 on the top side of disc 118 and downwardly below the plane of web 124 on the bottom side of disc 118. On the top side of disc 118 ribs 126 taper toward a radially innermost tip 134 that stops short of opening 50 and rim 116 to define the radially outer margin of plenum 46. Adjacent pairs of the tips 134 also define the entry end of outlets 54, and it will be noted that the flapper 60 is located at such entry end of its outlet 54. Spaced radially outwardly from tips 134 and at the radially inner extremity of the voids 130 are semi-circular, concave saddles 136 configured to matingly receive locating rings 138 (Figs. 7, 9) on the exterior of sensor tubes 78.

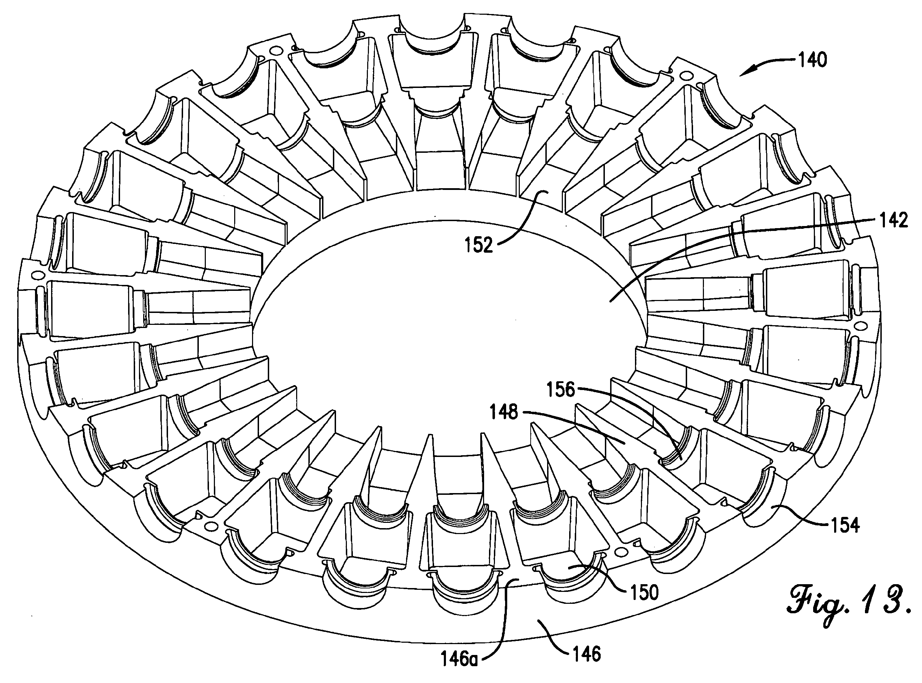

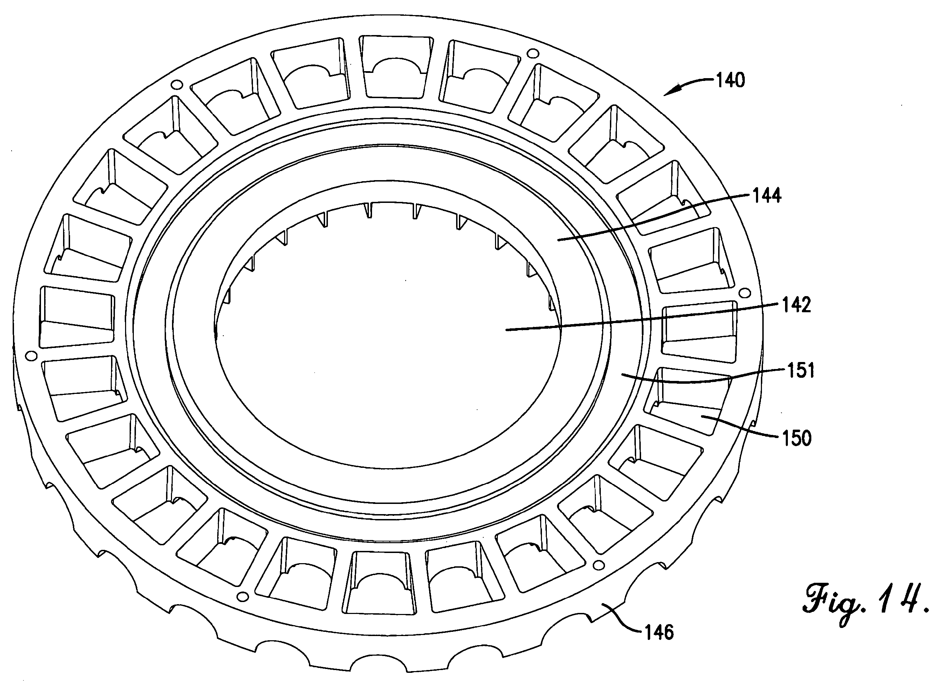

A second or top disc 140 (Figs. 13, 14) is stacked on top of lower disc 118 and is preferably molded from the same relatively hard rubber material (such as poured urethane) as lower disc 118. Top disc 140 has the same outer diameter as lower disc 118, but is provided with a significantly larger central opening 142 that is coaxial with opening 50. An annular web portion 144 surrounds opening 142 and is connected to an outermost annular wall 146 by a series of circumferentially spaced apart, radially extending ribs 148. Voids 150 are defined between adjacent ones of the ribs 148.

The top side of disc 140 is flat (Fig. 14), except for a shallow annular valley 151 between opening 142 and voids 150, but its bottom side (Fig. 13) is configured to cooperate with lower disc 118 in defining portions of the outlets 54 and means for locating and confining the sensors 76. To this end, on the bottom side of disc 140 web 144 is dished out to present a recessed annulus 152, and ribs 148 continue inwardly across annulus 152 to the edge of opening 142. Thus, ribs 144 on the bottom side of top disc 140 are configured substantially the same as ribs 126 on the top side of bottom disc 118 and are disposed in vertical registration therewith. Consequently, the stacked ribs 126 and 148 cooperate to define the side boundaries of outlets 54 for the width of web 144, while the annulus 152 defines the top boundary of the outlets 54 over that same radial width. When a valve 58 is in its closed position, flapper 60 thereof traverses substantially the entire vertical height of the outlet 54 between floor 52 and annulus 152.

Outer wall 146 is scalloped along its lower edge in the same manner as the upper edge of lower disc 118. Thus, a series of semi-circular notches 154 are defined in the lower edge 146a of wall 146 that register with corresponding notches 132 in lower disc 118. Notches 132 and 154 thus cooperate to matingly receive and retain the inner end of corresponding elbow fittings 56. The top portions of cups 90 of sensors 76 are received within the voids 150, while semi-circular saddles 156 at the radially inner ends of voids 150 register with corresponding saddles 136 on lower disc 118 to receive and confine the locating rings 138 on tubes 78 of sensors 76.

An annular top plate 158 (Figs. 5, 7) having the same outer diameter as discs 118 and 140 overlies top disc 140. A plurality of long bolts 159 near the outer periphery of plate 158 pass downwardly through plate 158, top disc 140, bottom disc 118, and support plate 98 to clamp such parts together in a sandwich-like assembly. Housing 100 is attached to support plate 98 by a series of screws 160 (Fig. 7) that pass upwardly through an outmost circumferential flange 162 around housing 100. Cover plate 158 is provided with a number of upwardly projecting, externally threaded studs 164 (Figs. 5, 8) for a purpose hereinafter explained in more detail. The heads of studs 164 project downwardly from the bottom side of cover plate 158 and are received within valley 151 to avoid interference with top disc 140.

Transition cone 110 is provided with a relatively thick, circular base 110a (Figs. 5, 7, 16) that is slightly smaller in diameter than opening 142 in top disc140. The thickness of base 110a is substantially the same as the combined thickness of top disc 140 and cover plate 158. Cone 110 is affixed to an inspection plate 166 (Figs. 5, 7, 15, 16) by a series of screws 168, and inspection plate 166 has a nominal diameter that is greater than opening 142. Accordingly, inspection plate 166 and cone 110 comprise an assembled unit wherein cone 110 fits within opening 142 and plate 166 overlaps the inner margin of top plate 158 to limit the depth of insertion of cone 110 into opening 142. Manifestly, this also establishes the working position of cone tip 112 with respect to rim 116, opening 50, and the upper end of conduit 38.

The unit that comprises cone 110 and inspection plate 166 may be conveniently installed and removed utilizing a handle 170 on the top of inspection plate 166. The peripheral edge of inspection plate 166 is configured to present four hooks 172 that open in a clockwise-facing direction and are sized to receive the studs 164 on top plate 158 when cone 110 is inserted into opening 142, inspection plate 166 is brought into abutting engagement with top plate 158, and inspection plate 166 is then rotated a short distance in a clockwise direction utilizing handle 170. A set of four internally threaded knobs 174 receive the externally threaded studs 164 for the purpose of releasably retaining inspection plate 166 on the studs 164. When knobs 174 are threaded downwardly on studs 164 to tightly bear against inspection plate 166, inspection plate 166 and cone 110 are held securely in place. Conversely, when knobs 174 are slightly backed off from a tight condition, inspection plate 166 and cone 110 may be slightly rotated in a counterclockwise direction to disengage hooks 172 from studs 164 and then lifted up and away from top plate 158 to provide inspection and access to the interior 46 of distribution head 42 via opening 142.

It should be apparent from the foregoing description that a distribution tower constructed in accordance with the principles of towers 34 provides a number of distinct advantages. Instead of being exposed to hostile environmental elements, critical and sensitive components associated with tower 34 are protectively contained within the interior 46 of distribution head 42. For example, tram line valves 58 are disposed within plenum 48, rather than on the exterior 44 of head 42 or elsewhere. Similarly, the solenoid actuators 66 for valves 58 are contained within the chamber 68 between support plate 98 and floor 52 of plenum 48.

In addition, sensors 76 are associated with outlets 54 inboard of elbow fittings 56 and are covered at the top and bottom by top plate 164 and support plate 98. Much of the conductors associated with sensors 76 and solenoids 66 are disposed within chamber 68, while that which extends below distribution head 42 is protectively received within compartment 104 of housing 100. The connectors between the conductors and leads are likewise well protected within compartment 104. While it is thus desirable that most of such sensitive components and hardware be contained within the interior 46 of distribution head 42, it is within the scope of the present invention to have less than all of such components so located.

It will be noted that as the primary stream of air and seeds passes upwardly through conduit 38 and the eased inlet 49 into the plenum 48, such stream encounters the downwardly projecting distribution cone 110. The parabolic periphery 114 of cone 110 gently splits the primary stream and disperses the seeds and air 360° into secondary streams that enter the outlets 54 on their way to the openers 22. In the first embodiment, raised rim 116 around opening 50 gently guides the seeds and air into plenum 48 while avoiding the presence of sharp corners that could otherwise cause turbulence and disruption of the flow. Consequently, it has been found that the flow rate through distribution head 42 is increased compared to prior constructions wherein rim 116 is lacking. Thus, significant operating efficiencies and improved performance are obtained.

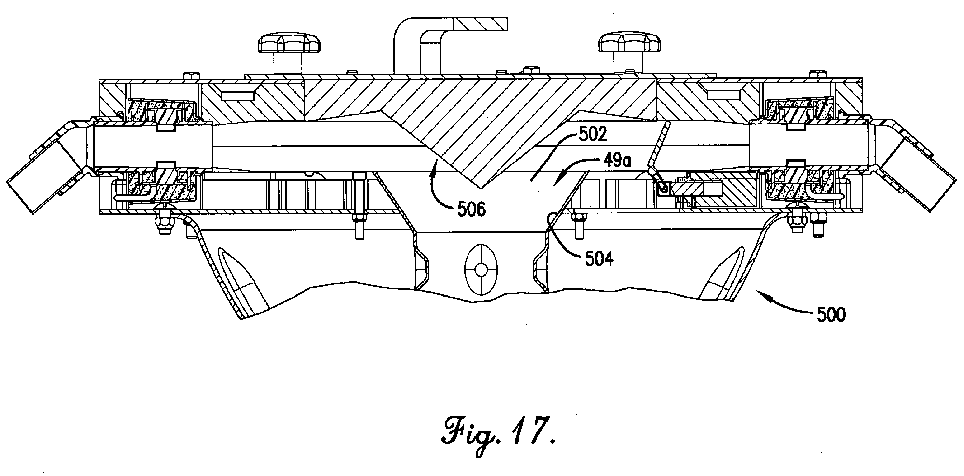

In a first alternative embodiment illustrated in Fig. 17, the tower 500 has an eased inlet 49a that comprises a beveled opening 502 into plenum 48. Beveled opening 502 has outwardly flaring sloping sidewalls 504 that are substantially flat. The periphery of transition cone 506 in this embodiment is illustrated as being straight rather than parabolic, but a parabolic construction would also be effective.

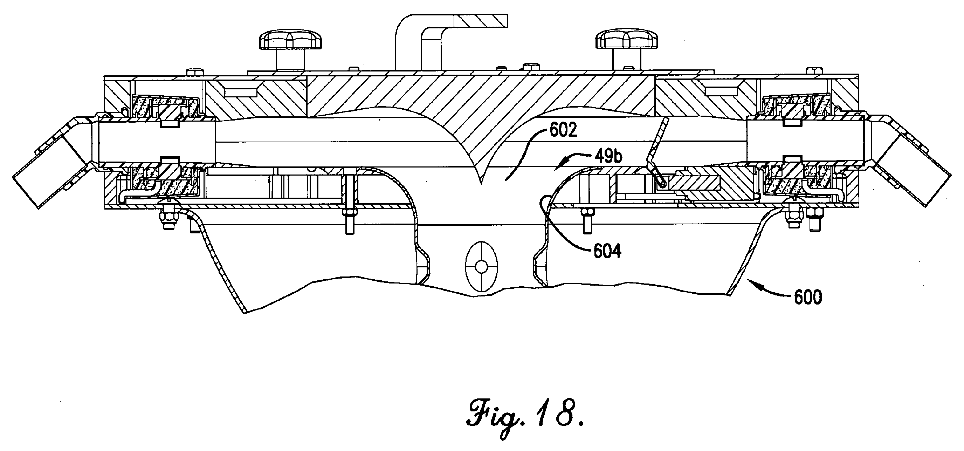

In a second alternative embodiment illustrated in Fig. 18, the tower 600 has an eased inlet 49b that comprises a beveled opening 602 of slightly different construction than beveled opening 502 of tower 500. In tower 600, the beveled opening 602 has gently convexly rounded, outwardly flaring sidewalls 604. Also, transition cone 606 in tower 600 has a parabolic, rather than straight, sidewall. Both of these alternative designs for the eased inlet can be expected to provide superior outcomes compared to the sharp-cornered prior art inlets.

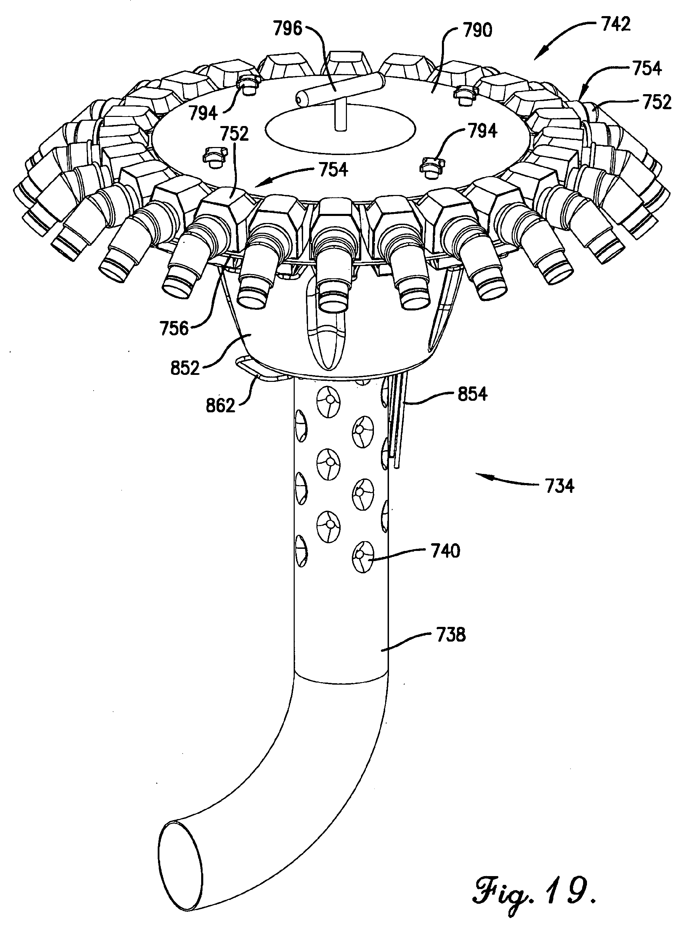

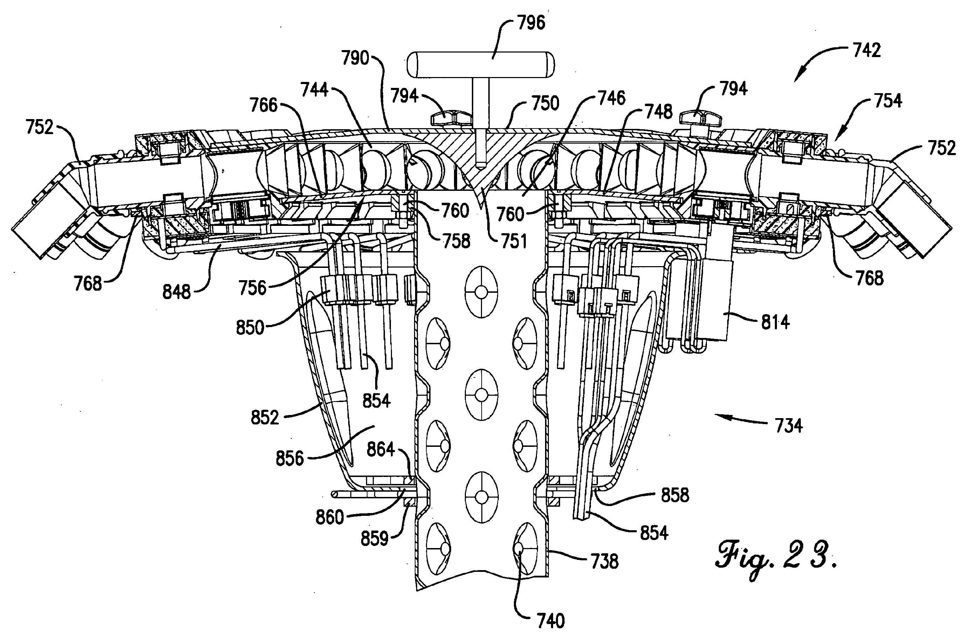

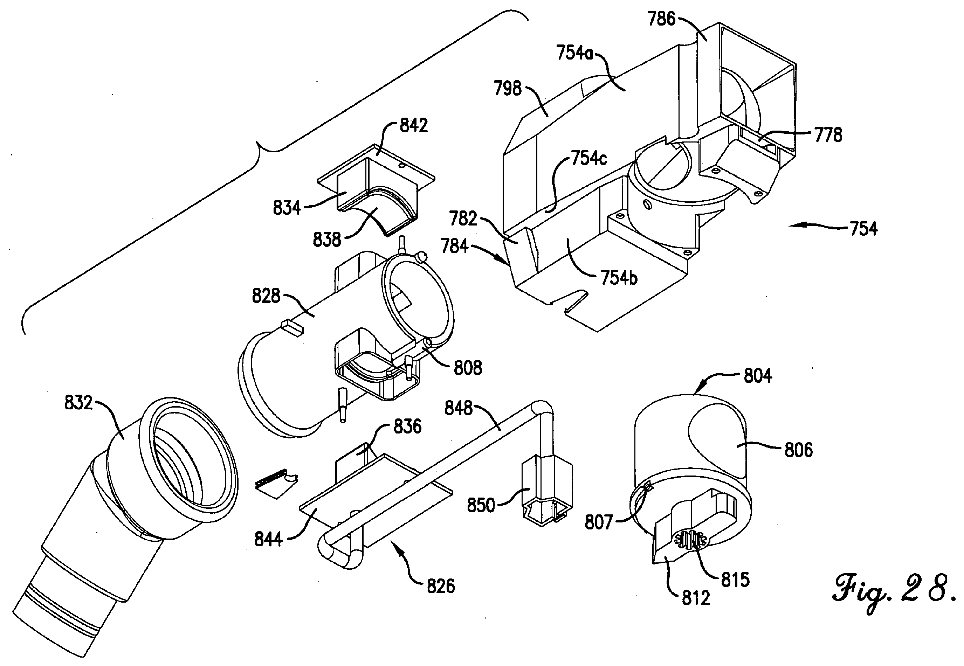

Figs. 19-41 depict embodiments of the present invention where the seed distribution tower 734 is equipped with modular components. Each of the towers 734 includes an upright pipe or conduit 738 fixed to frame 12 and connected at its lower end to the conduit 32 from hopper 28. Conduit 738 may be provided with a multitude of exterior dimples 740 (Figs. 19 and 23 for example) that form corresponding interior projections disposed to be impinged by seeds in the moving primary stream to aid in scattering the seeds as they approach the upper end of conduit 738. A generally flat, circular distribution head 742 is secured to the upper end of conduit 738 for splitting the primary stream into the secondary streams and transitioning the direction of seed flow from generally vertical to generally horizontal.

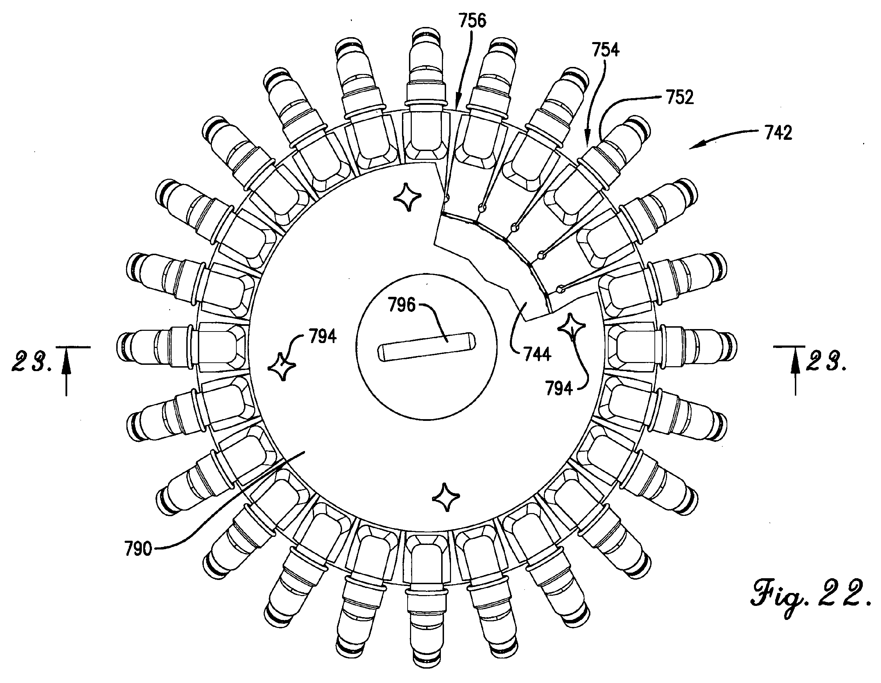

Broadly speaking, each distribution head 742 has an internal plenum chamber 744 (Figs. 22, 23 and 24) that receives the primary stream of air and seeds from the open top end of conduit 738 through a centrally disposed inlet 746 located in a floor 748 of plenum 744. A top wall 750 of plenum is spaced above floor 748 and carries a centrally disposed, inverted transition cone 752 for causing the incoming primary stream of air and seeds to effectually transition from vertical to horizontal and split into a plurality of secondary streams that issue from distribution head 742 via a corresponding number of discharge outlets 752 arranged circularly about the central upright axis of tower 734. Discharge outlets 752 are connected to the secondary hoses 35 that lead to openers 22.

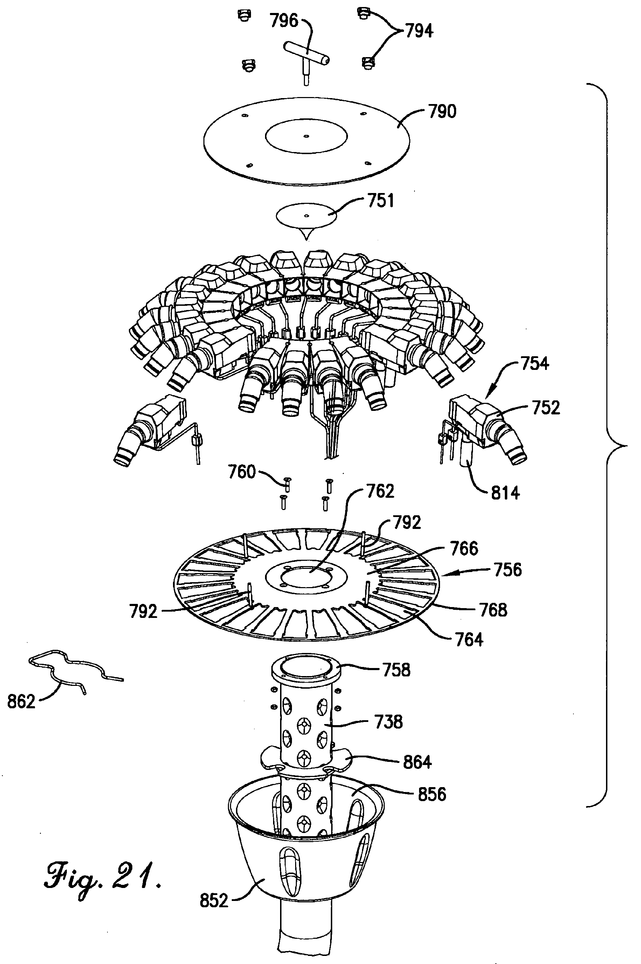

In accordance with the present invention, each of the discharge outlets 752 may take the form of an outlet module 754 that is independently installed on and removable from the tower 734 in a quick and easy manner. To this end, as particularly shown in Figs. 21 and 31-36, distribution head 742 includes a generally flat, annular support plate 756 that is fixedly secured to a mounting flange 758 on the upper end of conduit 738 in any suitable manner such as by a series of screws 760. Support plate 756 has a central hole 762 defining the inlet 746 into plenum 744 and a plurality of specially configured seat openings 764 arranged in a circular series concentrically about hole 762. Seat openings 764 are spaced radially outwardly from hole 762 to present an annular web surface 766 between hole 762 and seat openings 764 that defines the floor 748 of plenum 744. The region of web surface 766 directly above flange 758 is horizontal, while the remainder of support plate 756 slopes slightly downwardly and outwardly to a radially outermost, circumferential, solid narrow margin 768 (Figs. 21, 23 and 31-36) immediately outboard of the seat openings 764.

As illustrated particularly in Figs. 21 and 31-36, each seat opening 764 is generally rectangular and elongated in overall configuration, having a length in a radial direction that is somewhat greater than its width in a circumferential direction. Seat opening 764 has a pair of opposite side edges 770, a radially innermost end edge 772, and a radially outermost end edge 774. Innermost end edge 772 is shaped to present a radially outwardly projecting tab 776, while outermost edge 774 is straight and extends in perpendicular relationship to the radially extending, longitudinal axis of seat opening 764. The outermost end of seat opening 764 has a somewhat T-headed configuration, presenting a pair of oppositely laterally extending, enlarged notches 778. The inboard halves of side edges 770 taper toward one another as innermost end edge 772 is approached, while the outboard halves of side edges 770 extend parallel to one another out to the notches 778.

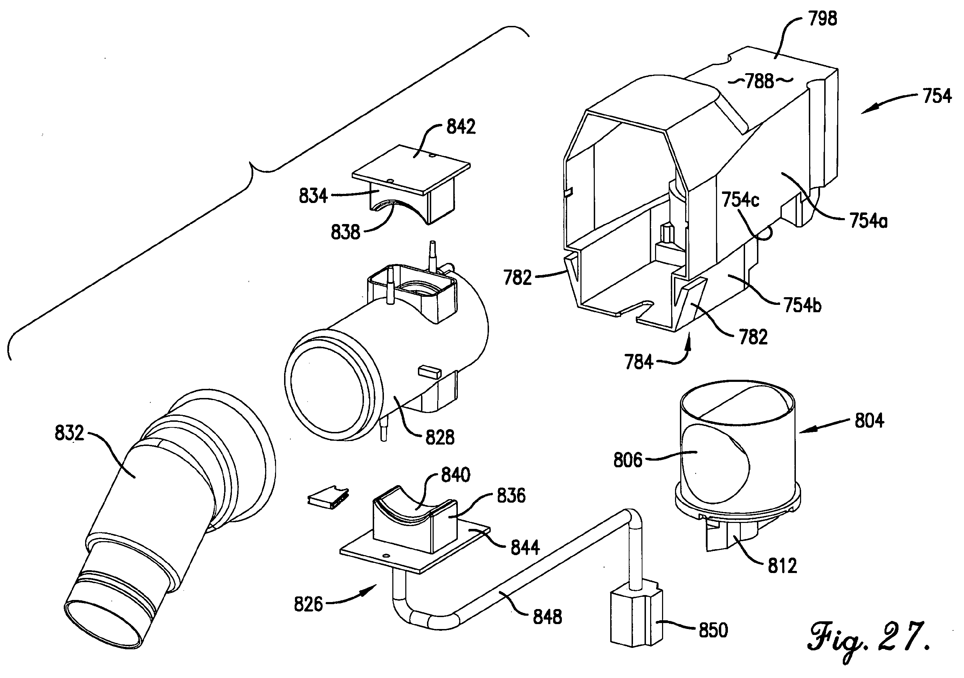

Each outlet module 754 has an overall generally block-like configuration. As illustrated particularly in Figs. 27-37, module 754 has an upper portion or half 754a that is slightly wider than its lower portion or half 754b so as to present an overhanging, downwardly facing shoulder 754c along both sides of module 754 at the intersection of upper half 754a and lower half 754b. Lower half 754b is configured to be complementally received within seat opening 764 when module 754 is seated on support plate 756, but upper half 754a is slightly wider than seat opening 764 such that overhanging shoulders 754c overlie and abut top surfaces of plate 756 adjacent seat opening 764 at that time, thus preventing module 754 from slipping completely downwardly through seat opening 764. A recess 780 in the inboard end of lower half754b is adapted to complementally receive tab 776 for locating and retaining purposes when module 754 is received in seat opening 764, and a pair of spring-loaded, resilient barbs 782 on opposite sides of lower half 754b adjacent the outboard end of module 754 are complementally shaped with respect to notches 778. Barbs 782 comprise a releasable latch 784 for securing module 754 to support plate 756 and present free upper ends that flare outwardly in their normal unrestrained state to a combined width that exceeds the width dimension of seat opening 764 across notches 778. On the other hand, barbs 782 may be resiliently squeezed together at their upper ends to present a reduced combined width matching or less than the dimension across notches 778 to permit barbs 782 to pass through seat opening 764 during installation and removal of module 754. The upper ends of barbs 782 are spaced below shoulder 754c a sufficient distance as to permit plate 756 to be trapped between the upper ends of barbs 782 and shoulder 754c when module 754 is fully seated in opening 764, thereby latching module 754 in place.

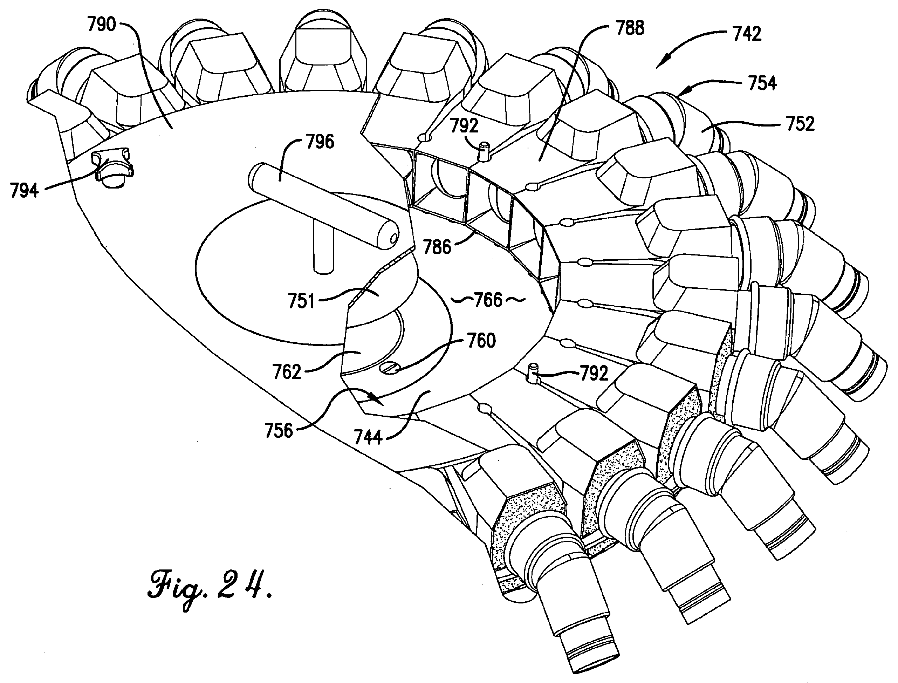

Each outlet module 754 has a rectangular (preferably square) inboard inlet end 786 that communicates with plenum 744 and receives air and seeds therefrom. When all of the modules 754 are in place in the seat openings 764, the inlet ends 786 of adjacent modules 754 abut one another in a lateral sense (see Figs. 22 and 24) to effectively form a circle that defines a radially outer wall of plenum 744. The interengagement of inlet ends 786 with one another effectively seals those interfaces against the escape of air and seeds, leaving travel through the interior of the outlet modules 754 as the only means of exiting plenum 744. Inlet ends 786 of modules 754 are lined up along the radially outer extremity of web surface 766 of plate 756, as particularly shown in Figs. 22 and 24.

Each module 754 has a flat top surface 788 that cooperates with the top surfaces of the other modules 754 in the circle to present an annular shelf that supports a circular, slightly domed lid 790 of distribution head 742. Lid 790 has transition cone 751 secured to the underside thereof and forms the top wall 750 of plenum 744. Four upright bolts 792 (Figs. 21, 24) at intervals about support plate 756 pass upwardly through lid 790 and threadably receive nutted hand knobs 794 for releasably securing lid 790 in place. A T-shaped handle 796 is attached to the center of lid 790 to facilitate handling thereof, the handle 796 also serving to threadably secure transition cone 751 to the underside of lid 790. When lid 790 is secured down tightly against outlet modules 754, it effectively retains modules 754 in place on the tower. Thus, although notches 778 and locating tabs 776 are preferred in addition to lid 790 for retaining modules 754 in place, notches 778 and tabs 776 are not necessarily required.

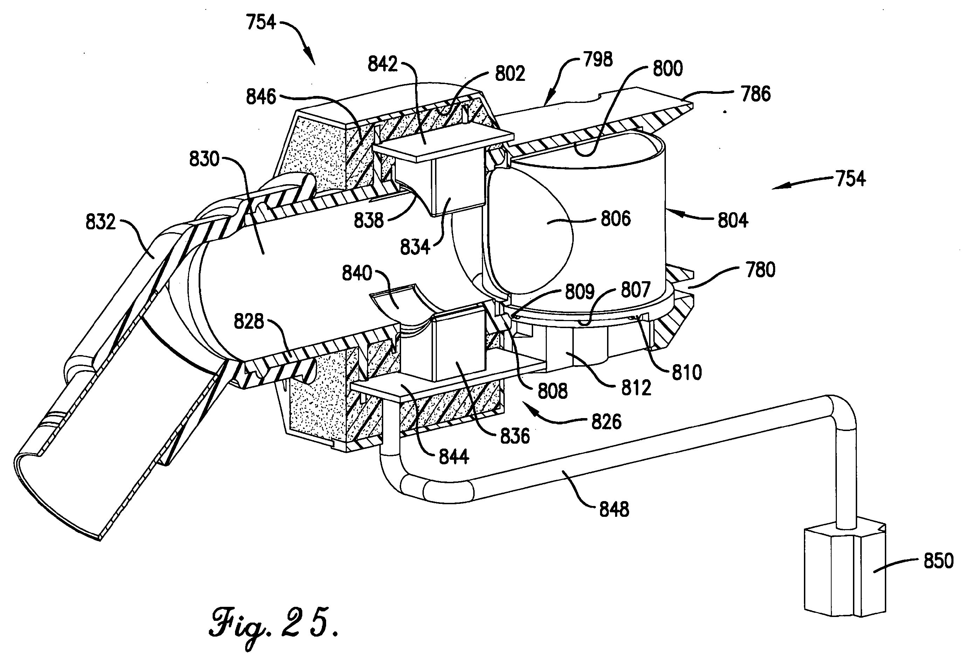

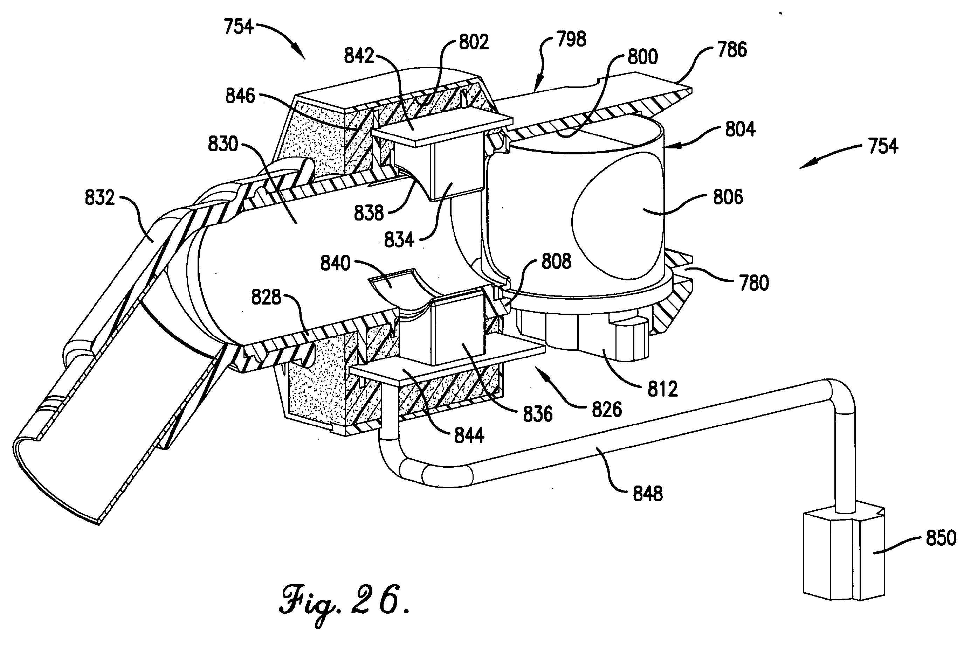

As detailed in Figs. 25-30, each module 754 comprises a tubular body that includes a housing 798 containing a valve chamber 800 generally adjacent inlet end 786 and a sensor chamber 802 generally adjacent the opposite end of module 754. An upright, cylindrical plug valve 804 is rotatably housed within valve chamber 800 for selective rotation about an upright axis between an open position as illustrated in Fig. 25 and a closed position as illustrated in Fig. 26. A horizontal cylindrical bore 806 defines a passage through valve 804 that communicates with plenum 744 via inlet end 786 when valve 804 is in the open position and blocks such communication when valve 804 is in the closed position. A groove 807 around the bottom of valve 804 provides a track within which is received a fixed peg 808. The opposite ends of groove 807 correspond to the open and closed positions respectively of valve 804, and a pair of downwardly projecting, triangular detents 809 and 810 are provided within groove 807 a short distance from such respective opposite ends of groove 807 to yieldably retain peg 808 at one or the other of the opposite ends of the groove 807. Detents 809, 810 can override peg 808 when valve 804 is rotated with force out of its open or closed position. The detents 809, 810 thus serve to yieldably retain valve 804 in its selected open or closed position. An arrow boss 812 on the bottom of valve 804 is shaped in the nature of an arrow to provide immediate visual recognition of whether valve 804 is in the open or closed position, the arrow boss 812 pointing in the outboard direction to indicate the open condition and pointing in a transverse direction to indicate a closed condition.

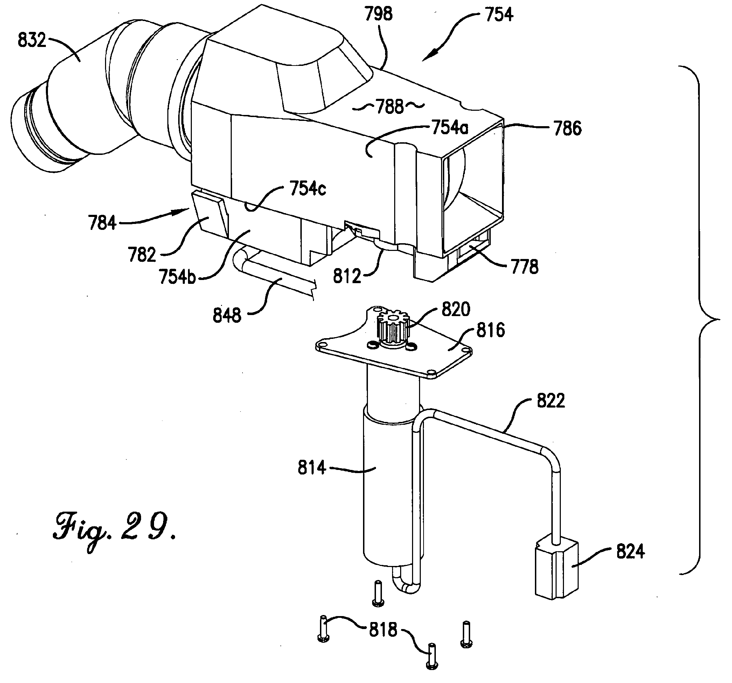

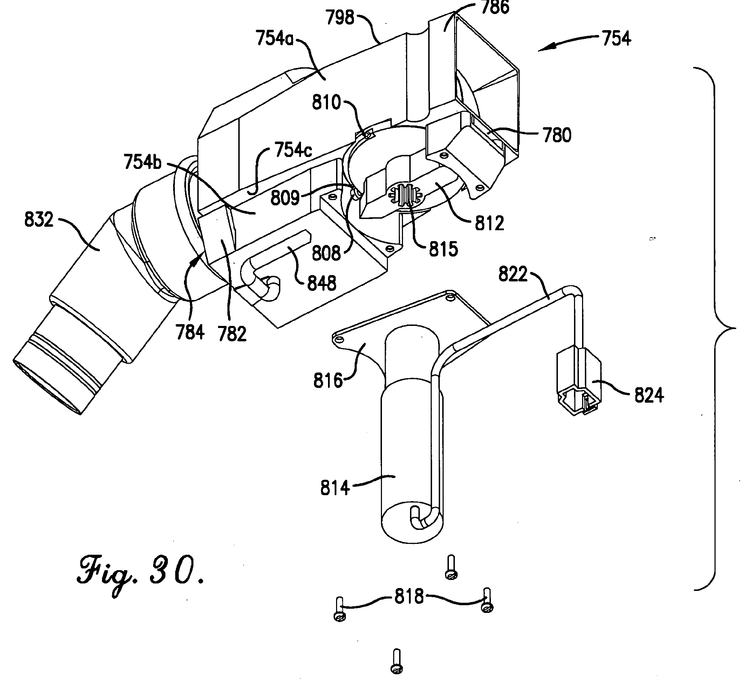

The arrow boss 812 on the bottom of each valve 804 is adapted to be manually gripped to permit manual turning of valve 804, if desired. Alternatively, mechanical drive is provided for by a splined bore 815 in arrow boss 812 that facilitates the connection of a suitable drive motor or the like to valve 804. In this respect, as illustrated particularly in Figs. 29 and 30, an electrically energized actuating motor 814 may be removably secured to housing 798 by screws 818 and a mounting plate 816 fixed to motor 814. The output shaft of motor 814 has a spur gear 820 fixed thereto that is adapted to be drivingly received within bore 815 to provide motorized operation of valve 804. A conductor wire 822 for supplying electrical power to motor 814 leads away from motor 814 toward a source of such power. Thus, if the user desires motorized operation of valve 804, he attaches motor 814 to valve 804. If only manual actuation is desired, motor 814 is removed by simply unscrewing mounting plate 816 from housing 798.

Each outlet module 754 further includes a sensor 826 disposed within sensor chamber 802 for detecting the movement or non-movement of seeds through module 754. In the exemplary embodiment, sensor 826 includes a tube 828 having a central passage 830 that communicates with plenum 744 via bore 806 in valve 804 when valve 804 is open. The opposite outboard end of passage 830 communicates with a corresponding secondary hose 35 via an elbow fitting 832 on the outboard end of tube 828.

In the illustrated embodiment, sensor 826 is an optical sensor, although a variety of other types of sensors could be utilized, such, for example, an audio sensor, a pressure sensor, or an impact sensor. As an optical sensor, each sensor 826 includes a pair of photo cells 834, 836 carried by tube 828 in diametrically opposed locations for transmitting a light beam across passage 830. One of the cells is a sender and the other is a receiver. Breaking of the light beam by seeds moving in passage 830 is used to confirm the fact that seeds are indeed being dispensed through the module. A clear lens 838 in the wall of tube 828 covers cell 834, while another clear lens 840 covers cell 836. A pair of circuit boards 842, 844 are embedded within potting material 846 surrounding tube 828 within sensor chamber 802, such circuit boards 842, 844 being electrically connected to the cells 834 and 836 respectively. Suitable boards that may serve as circuit boards 842, 844 are available from DICKEY-john Corporation of Auburn, Illinois as the VIGILENSE brand blockage sensor. An electrical conductor 848 connected to boards 842, 844 has a quick connector 850 at its distal end for connecting sensor 826 with an appropriate control system of the machine.

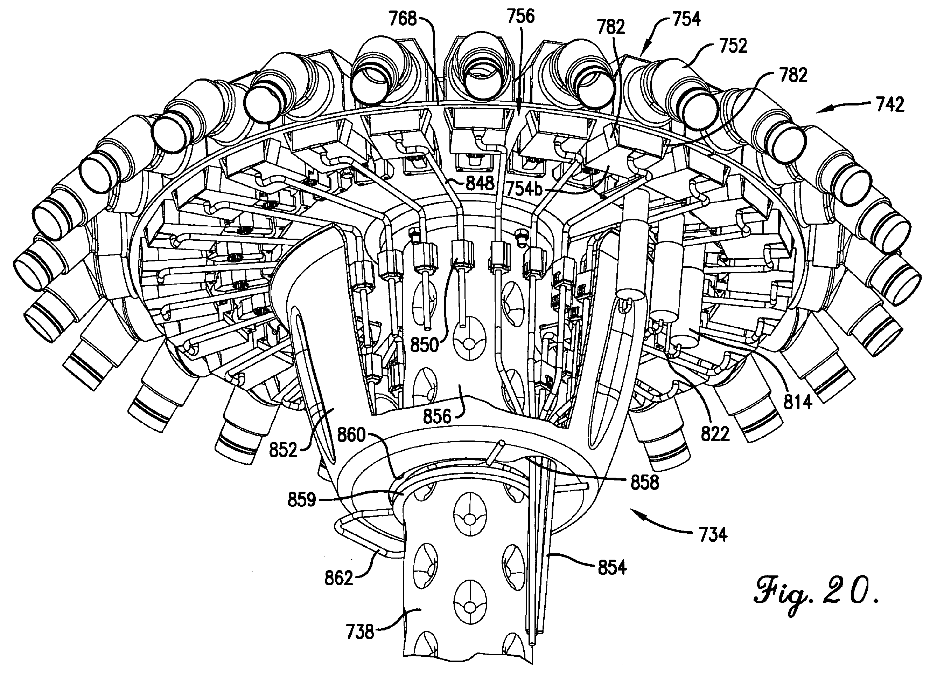

As seen in Figs. 20 and 23, the conductors 848 associated with sensors 826 of all of the outlet modules 754 of distribution head 742 exit from the lower halves 754b of modules 754 below support plate 756. They then lead generally radially inwardly from modules 754 toward upright conduit 738 and pass over the upper edge of a bowl-shaped housing 852 that is spaced a short distance below support plate 756. The free ends of sensor conductors 848 having connectors 850 thereon are enclosed within housing 852 where they may be joined with leads 854 from the control system of the seeder. Thus, housing 852 provides a protective compartment 856 within which sensor conductors 848, connectors 850, and leads 854 may be contained. One or more holes 858 may be provided in the bottom of housing 852 through which leads 854 may be trained.

Housing 852 is retained on conduit 738 by any suitable means, such as, for example, a ring 859 (Figs. 20 and 23) fixed to conduit 738 below a larger diameter opening 860 in the bottom of housing 852 and a removable spring clip 862 that embraces conduit 738 above ring 859 and below the bottom of housing 852. A petal-shaped plate 864 (see also Fig. 21) of larger diameter than opening 860 may be fixed to conduit 738 a short distance above ring 859 to overlie and engage the top side of the housing bottom and serve as an upper limit to housing 852 when it is installed on conduit 738 by lifting it up into place from the bottom end of conduit 738.

Only a few of the outlet modules 754, if any, on each distribution tower 734 are likely to be used as tram lines. Thus, it is within the purview of the present invention for only a few of the outlet modules 754 on each tower 734, or none at all, to be provided with shut-off valves 804. Similarly, even if all of the outlet modules 754 on a particular tower 734 are provided with valves 804, it is within the purview of the present invention to have only a few of them, or none at all, provided with actuating motors 814. The conductors 822 associated with any motors 814 that are utilized on a head 742 may conveniently be trained up and over the upper edge of housing and into the protective compartment 856, where their connectors 824 may be connected with appropriate ones of the leads 854 from the control system of the seeder.

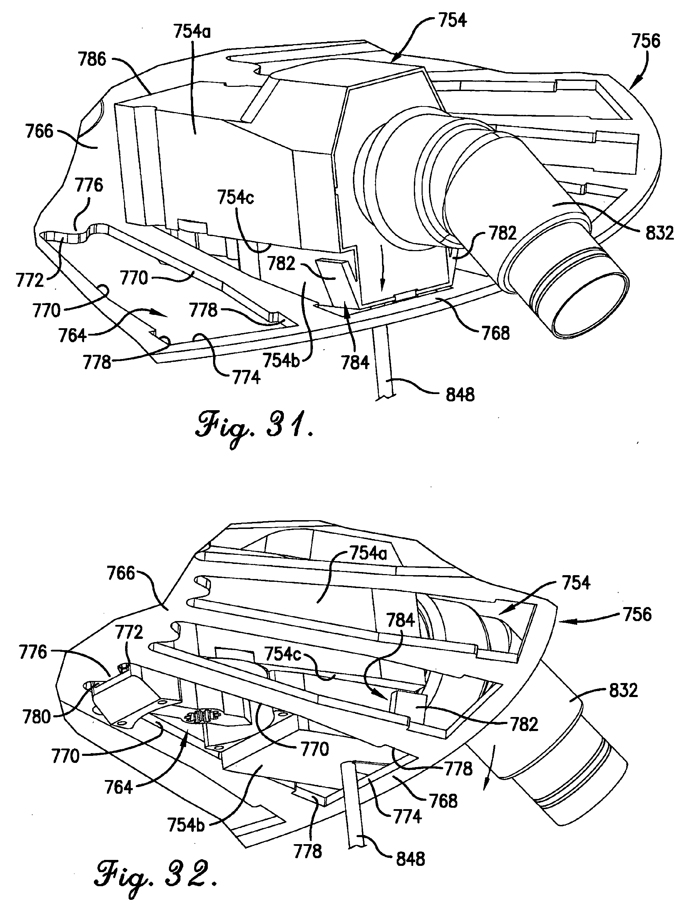

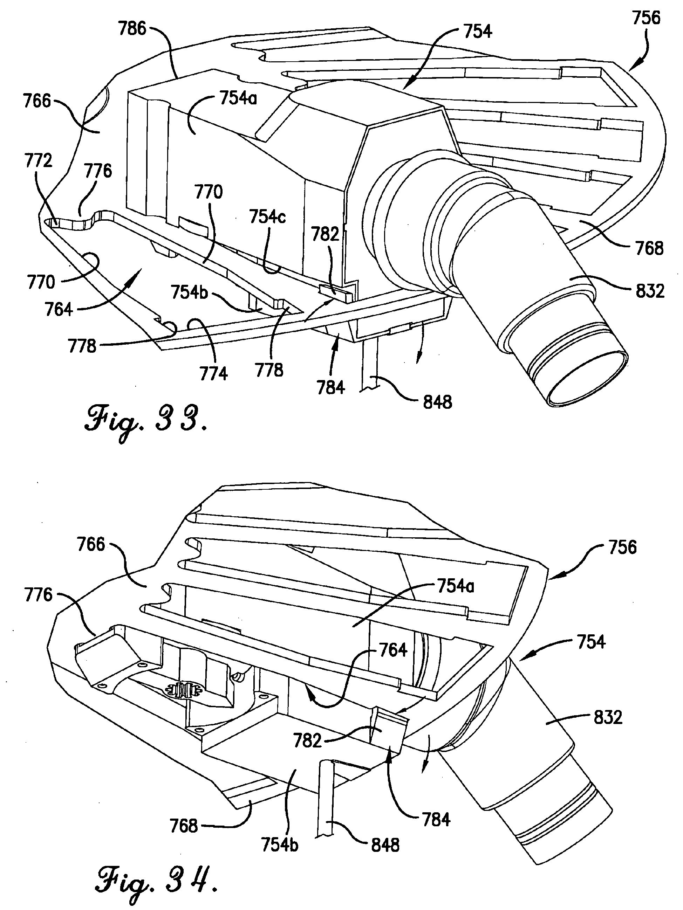

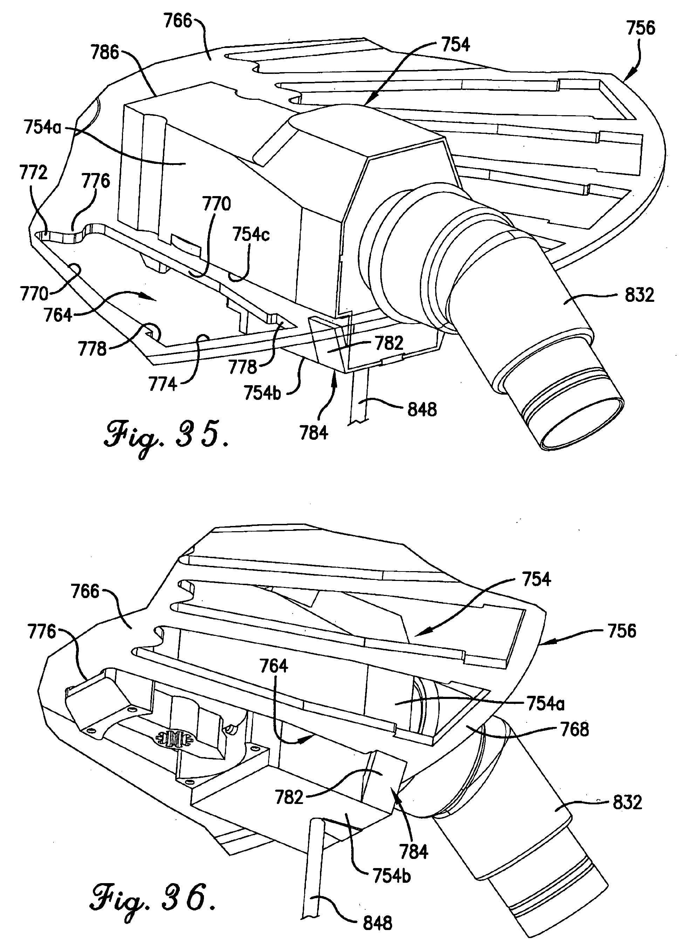

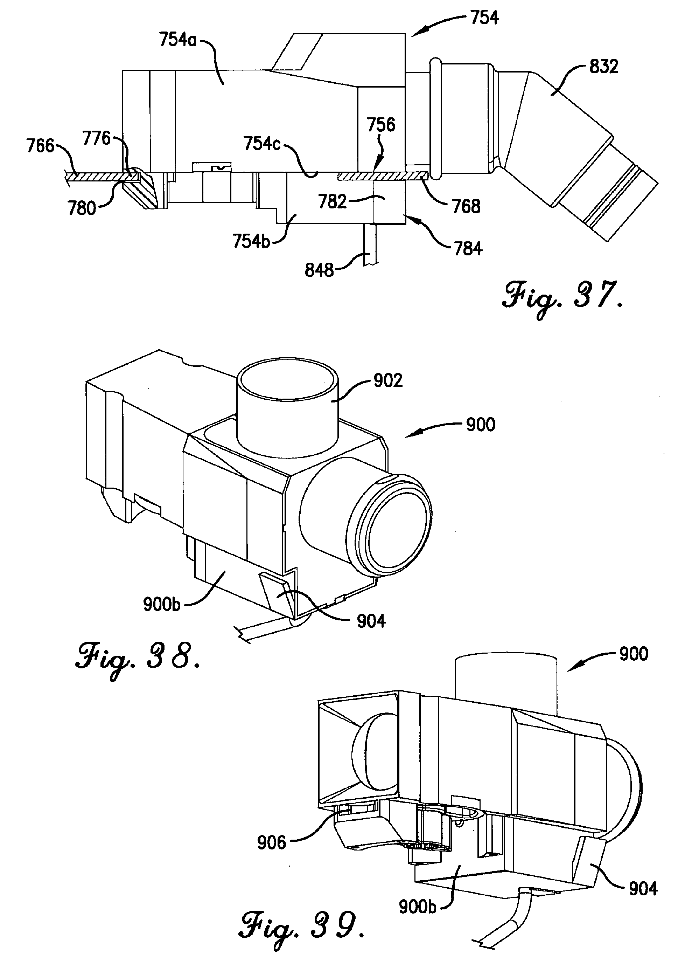

It should be apparent from the foregoing detailed description of the construction of distribution tower 734 that the modular nature of tower 734 permits rapid assembly and disassembly of the tower, as well has quick and easy replacement of individual ones of the outlet modules 754. For example, as illustrated in Figs. 31-37 installation of a module 754 onto support plate 756 is accomplished by simply properly orienting the module with respect to the selected seat opening 764, inserting the inboard end of the module's bottom half 754b on an incline down into seat opening 764 to cause tab 776 to enter recess 780, and then pushing the outboard end of module 754 downwardly until the module's bottom half 754b snaps securely in place within opening 764. Figs. 31 and 32 illustrate the start of this sequence wherein tab 776 is received within recess 780 but barbs 782 are up out of opening 764; Figs. 33 and 34 illustrate the midpoint of the sequence wherein barbs 782 are received within notches 778 of opening 764 and are being flexed inwardly to permit continued downward movement of the module's bottom half 754b into opening 764; and Figs. 35 and 36 illustrate the module's bottom half 754b fully in place within opening 764 with barbs 782 snapped resiliently back out to their normal positions to underlie adjacent surface areas of support plate 756 so as to latch module 754 against upward movement. Fig. 37 also shows module 754 fully latched in place.

To remove a module from support plate 756, it is only necessary for the user to squeeze barbs 782 toward one another a sufficient extent that their upper ends become aligned with notches 778 and then, while maintaining the barbs 782 squeezed inwardly, thrust the outboard end of the module upwardly to dislodge the module from the seat opening. The dislodged module can then be lifted completely off support plate 756 for service or replacement as may be necessary or desirable.

It is to be appreciated that the modules which provide outlets 752 for distribution head 742 may embody a variety of different designs and perform different and/or additional functions. Yet, all are provided with those common features that render the outlet truly modular in nature.

For example, Figs. 38 and 39 show an alternative embodiment wherein outlet module 900 has an extra inlet 902 by which additional products such as dry or liquid fertilizer, other types of seeds, or other substances could be added to the secondary stream exiting the plenum of distribution head 742. Module 900 may or may not have an internal shut-off valve, and may or may not be provided with a flow sensor. Nonetheless, module 900 still has a body that is configured the same as the module 754 with respect to the way it seats within seat opening 764. It will be noted in this respect that the bottom half 900b of module 900 is the same configuration as the bottom half 754b of module 754, barbs 904 are the same configuration as barbs 782 of module 754, and recess 906 is the same configuration as recess 780 of module 754. The overall size of module 900 is the same as module 754 such that a distribution head may contain a mixture of different types of the modules if desired.

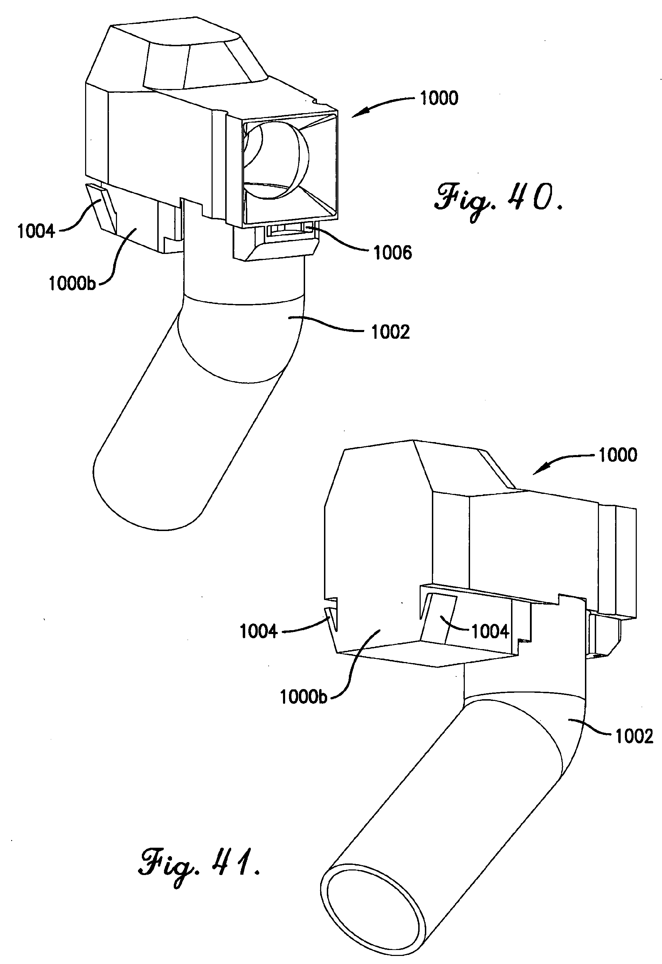

Figs. 40 and 41 illustrate another alternative embodiment wherein an outlet module 1000 does not have the usual type of horizontal discharge tube for the secondary stream leaving the module but instead is provided with a downwardly projecting discharge tube 1002. Once again, module 1000 may or may not have a shut-off valve and may or may not have a flow sensor. But with respect to its modular mounting aspects, it is the same as modules 900 and 754. Note in this respect that the bottom half 1000b of module 1000 is the same configuration as the bottom half 754b of module 754 and the bottom half 900b of module 900, barbs 1004 are the same configuration as barbs 782 of module 754 and barbs 904 of module 900, and recess 1006 is the same configuration as recess 780 of module 754 and recess 906 of module 900. The overall size of module 1000 is the same as module 754 and module 900 such that a distribution head may contain a mixture of different types of the modules if desired.

## Claims

1. A seed distribution tower (34) for an air seeder (10) comprising:
an upright conduit (38) for conveying a combination of seeds and air in a primary stream toward an upper end of the conduit (38),
a distribution head (42) at said upper end of the conduit (38) for receiving the primary stream from the conduit (38) and splitting the primary stream into a plurality of secondary streams that issue from a plurality of discharge outlets (54) on the distribution head (42), and
electrical hardware below said distribution head and connected with a component at said head (42),
**characterized in that** a protective housing (100) surrounds said conduit (38) below said head (42) and encloses said hardware.

2. A seed distribution tower (34) as claimed in claim 1, **characterized in that** said component comprises a sensor (76) for detecting seed flow through an outlet and/or an actuable shut-off valve (58) for blocking the discharge of a secondary stream from at least one of said outlets (54) when the valve (58) is in a closed position.

3. A seed distribution tower (34) as claimed in any one or more of claims 1 and 2, **characterized in that** said hardware comprises an electrical conductor (75, 92) leading downwardly away from said distribution head (42) and a connector (77, 94) at a distal end of the conductor (75, 92).

4. A seed distribution tower (34) as claimed in any one or more of claims 1-3, **characterized in that** an electrical lead (106) includes a first portion inside said housing (100) and a second portion outside said housing (100), the first portion of said lead (106) being electrically coupled with said electrical conductor (75, 92) inside said housing (100) via said connector (77, 94), further **characterized in that** the housing (100) has an opening (102) through which said lead (106) may pass from outside said housing (100) to inside said housing (100).

5. A seed distribution tower as claimed in any one or more of claims 1-4, **characterized in that** the housing (100) is generally bowl-shaped with a wide upper end adjacent said head (42) and a narrower lower end spaced below said head (42).

## Patentansprüche

1. Saatgutverteilungstürm (34) für eine luftbetriebene Sämaschine (10), mit:
einem aufrecht stehenden Kanal (38) zum Fördern einer Kombination aus Saatgut und Luft in einem Primärstrom in Richtung auf ein oberes Ende des Kanals (38),
einem Verteilerkopf (42) am oberen Ende des Kanals (38) zum Empfangen des Primärstroms von dem Kanal (38) und zum Aufspalten des Primärstroms in eine Mehrzahl von Sekuridärströmen, die aus einer Mehrzahl von Austrittsauslässen (54) an dem Verteilerkopf (42) austreten, und
einer elektrischen Hardware unterhalb des Verteilerkopfes, die mit einer Komponente des Kopfes (42) in Verbindung steht,
**dadurch gekennzeichnet, dass** ein Schutzgehäuse (100) den Kanal (38) unterhalb des Kopfes (42) umgibt und die Hardware umschließt.

2. Saatgutverteilungsturm (34) nach Anspruch 1, **dadurch gekennzeichnet, dass** die Komponente einen Sensor (76) zum Erfassen des Saatgutstroms durch einen Auslass und/oder ein betätigbares Sperrventil (58) umfasst, um das Austreten eines Sekundärstroms aus zumindest einem der Auslässe (54) zu blockieren, wenn sich das Ventil (58) in einer geschossenen Position befindet.

3. Saatgutverteilungsturm (34) nach einem oder mehreren der Ansprüche 1 und 2, **dadurch gekennzeichnet, dass** die Hardware einen elektrischen Leiter (75, 92), der nach unten und weg von dem Verteilerkopf (42) führt, und ein Verbindungsmittel (77, 94) an einem distalen Ende des Leiters (75, 92) aufweist.

4. Saatgutverteilungsturm (34) nach einem oder mehreren der Ansprüche 1-3, **dadurch gekennzeichnet, dass** eine elektrische Leitung (106) einen ersten Bereich innerhalb des Gehäuses (100) und einen zweiten Bereich außerhalb des Gehäuses (100) aufweist, wobei der erste Bereich der Leitung (106) mit dem elektrischen Leiter (75, 92) innerhalb des Gehäuses (100) über das Verbindungsmittel (77, 94) elektrisch gekoppelt ist, außerdem **dadurch gekennzeichnet, dass** das Gehäuse (100) eine Öffnung (102) hat, durch die die Leitung (106) von der Außenseite des Gehäuses (100) zur Innenseite des Gehäuses (100) führen kann.

5. Saatgutverteilungsturm nach einem oder mehreren der Ansprüche 1-4, **dadurch gekennzeichnet, dass** das Gehäuse (100) allgemein die Form einer Schale mit einem weiteren oberen Ende benachbart zum Kopf (42) und einem schmaleren unteren Ende beabstandet unter dem Kopf (42) hat.

## Revendications

1. Tour de distribution (34) de semences pour semoir pneumatique (10), comportant :
un conduit vertical (38) pour acheminer une combinaison de semences et d'air en un flux primaire vers une extrémité supérieure du conduit (38),
une tête de distribution (42) à ladite extrémité supérieure du conduit (38) pour recevoir le flux primaire arrivant du conduit (38) et diviser le flux primaire en une pluralité de flux secondaires qui sortent par une pluralité de sorties de refoulement (54) présentes sur la tête de distribution (42), et
du matériel électrique sous ladite tête de distribution, connecté à un organe au niveau de ladite tête (42),
**caractérisée en ce qu'**un carter de protection (100) entoure ledit conduit (38) sous ladite tête (42) et renferme ledit matériel.

2. Tour de distribution (34) de semences selon la revendication 1, **caractérisée en ce que** ledit organe comprend un détecteur (76) pour détecter le passage de semences par une sortie et/ou une vanne d'arrêt manoeuvrable (58) pour bloquer le refoulement d'un flux secondaire depuis au moins une des sorties (54) quand la vanne (58) est en position fermée.

3. Tour de distribution (34) de semences selon l'une quelconque des revendications 1 et 2, **caractérisée en ce que** ledit matériel comprend un conducteur électrique (75, 92) descendant en s'éloignant de ladite tête de distribution (42) et un connecteur (77, 94) à une extrémité distale du conducteur (75, 92).

4. Tour de distribution (34) de semences selon l'une quelconque ou plusieurs des revendications 1 à 3, **caractérisée en ce qu'**un fil électrique (106) comprend une première partie à l'intérieur dudit carter (100) et une seconde partie à l'extérieur dudit carter (100), la première partie dudit fil (106) étant connectée électriquement audit conducteur électrique (75, 92) à l'intérieur dudit carter (100) par l'intermédiaire dudit connecteur (77, 94), **caractérisée en outre en ce que** le carter (100) a une ouverture (102) par laquelle ledit fil (106) peut passer de l'extérieur dudit carter (100) à l'intérieur dudit carter (100).

5. Tour de distribution de semences selon l'une quelconque ou plusieurs des revendications 1 à 4, **caractérisée en ce que** le carter (100) a globalement la forme d'une cuvette avec une extrémité supérieure large adjacente à ladite tête (42) et une extrémité inférieure plus étroite espacée sous ladite tête (42).
